# EUROPEAN PATENT SPECIFICATION

(11) **EP 4 377 974 B1**
(45) Date of publication and mention of the grant of the patent: **26.11.2025**
(21) Application number: 21802081.6
(22) Date of filing: 06.10.2021
(51) Int. Cl.: G21C 1/03, G21C 5/02, G21C 7/08, G21C 7/32, G21C 11/06, G21C 15/04, G21C 15/12, G21D 7/04, G21C 3/24, G21C 5/10, G21C 15/243, G21C 15/253

(54) **MODIFIED LOW POWER, FAST SPECTRUM MOLTEN FUEL REACTOR DESIGNS HAVING IMPROVED NEUTRONICS**
MODIFIZIERTE SCHMELZBRENNSTOFFREAKTORENTWÜRFE MIT NIEDRIGER LEISTUNG UND SCHNELLEM SPEKTRUM MIT VERBESSERTER NEUTRONIK
CONCEPTIONS DE RÉACTEURS À COMBUSTIBLE FONDU À FAIBLE PUISSANCE ET À SPECTRE RAPIDE MODIFIÉS, À NEUTRONIQUE AMÉLIORÉE

(30) Priority: 29.07.2021 US 202117388824
(43) Date of publication of application: 05.06.2024
(73) Proprietor: TerraPower, LLC, Bellevue, WA 98008 (US)
(72) Inventor: CISNEROS, Anselmo, T., Jr., Bellevue, WA 98008 (US); BERG, Phillip, Bellevue, WA 98008 (US); BLATNIK, Michael, T., Bellevue, WA 98008 (US); EDWARDS, Michael, J., Bellevue, WA 98008 (US); MARKHAM, Gregory, T., Bellevue, WA 98008 (US); WALTER, Daniel, J., Bellevue, WA 98008 (US)
(74) Representative: D Young & Co LLP
(86) International application number: PCT/US2021/053750
(87) International publication number: WO 2023/009153

(56) References cited:
- WO-A2-2021/133952
- JP-A- H06 174 882
- US-A1- 2018 137 944

## Description

### INTRODUCTION

The utilization of molten nuclear fuels, or simply molten fuels, in a nuclear reactor to produce power provides significant advantages as compared to solid fuels. For instance, molten nuclear fuel reactors generally provide higher power densities compared to solid fuel reactors, while at the same time having reduced fuel costs due to the relatively high cost of solid fuel fabrication.

Molten fluoride fuel salts suitable for use in nuclear reactors have been developed using uranium tetrafluoride (UF₄) mixed with other fluoride salts. Molten fluoride salt reactors have been operated at average temperatures between 600 °C and 860 °C. Binary, ternary, and quaternary chloride fuel salts of uranium, as well as other fissionable elements, have been described in co-assigned U.S. Patent Application Serial No. 14/981,512, titled MOLTEN NUCLEAR FUEL SALTS AND RELATED SYSTEMS AND METHODS. In addition to chloride fuel salts containing one or more of UCl₄, UCl₃F, UCl₃, UCl₂F₂, and UClF₃, the application further discloses fuel salts with modified amounts of ³⁷Cl, bromide fuel salts such as UBr₃ or UBr₄, thorium chloride fuel salts, and methods and systems for using the fuel salts in a molten fuel reactor. Average operating temperatures of chloride salt reactors are anticipated between 300 °C and 800 °C, but could be even higher, e.g., > 1000 °C.

Low power experimental reactors are useful in investigating various aspects of nuclear reactor design and operation. Because significant power generation, per se, is not the goal, novel designs for low power reactors may be pursued that would be unfeasible in a normal commercial setting.

WO 2021/133952 A2 discloses designs for a low power, fast spectrum molten fuel nuclear reactor, which may be adapted to extra-terrestrial use as described herein for use as a low-gravity, moon-, Mars-, or space-based power generator. These low power reactors include a reactor core volume defined by a radial neutron reflector enclosed in a reactor vessel, in which heated fuel salt flows from the reactor core through a duct between the radial neutron reflector and the reactor vessel and back into the reactor core.

This document describes alternative designs for a low power, fast spectrum molten fuel salt nuclear reactor that can be used to advance the understanding of molten salt reactors, their design and their operation. Furthermore, the designs described may be adapted to extra-terrestrial use as described herein for use as a low-gravity, moon-, Mars-, or space-based power generator. These low power reactors include a reactor core volume defined by axial and radial neutron reflectors enclosed in a reactor vessel, in which heated fuel salt flows from the reactor core through a duct between the radial neutron reflector and the reactor vessel and back into the reactor core. Heat generated from the fission in the reactor core is transferred from the molten fuel through the reactor vessel to a coolant, in the case of an experimental design, or directly to an extra-terrestrial environment, in the case of an extra-terrestrial design. The molten fuel may be actively pumped and/or the flow of the molten fuel may be driven by natural circulation caused by the density difference between high temperature molten fuel and low temperature molten fuel.

When adapted for experimental use, these low power reactors includes a reactor system designed to allow the investigation of such phenomena as: Low effective delayed neutron fraction, due to delayed neutron precursor advection and presence of plutonium in the fuel salt; Negative fuel density (expansivity) reactivity coefficient; Reactivity effects associated with asymmetric flow and thermal distribution (velocity and temperature) of fuel salt entering the active core; K-effective stability (reactivity fluctuations) due to flow instabilities and/or recirculations; and, Approach to criticality (startup), reactivity control, and shutdown.

When adapted for extra-terrestrial use, the designs take advantage of the reduced radiation exposure requires and the natural heat sink provided by extra-terrestrial environments. Heat may be dissipated directly to cold of space, for example, through a thermoelectric power generator attached to the exterior of the reactor vessel.

These and various other features as well as advantages which characterize the systems and methods described herein will be apparent from a reading of the following detailed description and a review of the associated drawings. Additional features are set forth in the description which follows, and in part will be apparent from the description, or may be learned by practice of the technology. The benefits and features of the technology will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

The following drawing figures, which form a part of this application, are illustrative of described technology and are not meant to limit the scope of the invention as claimed in any manner, which scope shall be based on the claims appended hereto.
FIG. 1 illustrates a functional block diagram of pool-type reactor designed for use with a fuel salt.
FIG. 2 illustrates a rendering of one possible physical implementation of a reactor as shown in FIG. 1.
FIGS. 3A-3D illustrate an embodiment of the reactor system of FIG. 1.
FIG. 4 illustrates the fuel salt volume and flow paths within the reactor of FIG. 3.
FIGS. 5A and 5B illustrate an embodiment of a reflector assembly that could be used in the reactor system of FIG. 3.
FIGS. 6A-6D illustrate different embodiments of the control drums.
FIG. 7 illustrates an embodiment of a vessel head assembly.
FIG. 8 illustrates the main components of the reactor (again excluding the shielding vessel).
FIG. 9 illustrates an embodiment of a fuel pump assembly.
FIG. 10 illustrates a reactor vessel with a dimpled exterior surface instead of fins for improved heat transfer.
FIGS. 11A-11F illustrate different views of an alternative embodiment of a low power reactor system.
FIGS. 12A-12C illustrate an embodiment of reactor facility with an alternative primary cooling system and secondary cooling system instead of a heat rejection system.
FIG. 13 illustrates a functional block diagram of pool-type reactor system designed for use with a molten nuclear fuel in an extra-terrestrial environment or another suitably cold environment.
FIGS. 14A-14B illustrate yet another embodiment of a pool-type reactor system in which, except for molten fuel flow through the reactor core and pump chamber, all the flow paths of the molten fuel are in contact with and are defined by the interior surface of the reactor vessel.
FIG. 15 illustrates two alternative embodiments of the upper molten fuel exit channel and pump layout that could be used in any reactor system embodiment described herein.
FIG. 16 illustrates yet another embodiment of an upper molten fuel exit channel and the surface elements of the radial reflector that define the channel.
FIG. 17 illustrates an alternative embodiment of a reactor system.
FIG. 18 illustrates an alternative embodiment of a reactor in which the reflector is outside of the reactor vessel.
FIGS. 19A-19E illustrate several different options available for reactivity control using an external radial reflector.
FIG. 20 illustrates an embodiment of a low power reactor design adapted to reduce the reactivity change associated with flowing delayed neutron precursors.
FIGS. 21A and 21B illustrate an embodiment of a reactor in which transverse swirling flow is induced in the fuel salt flowing along the interior surface of the lateral sides of the reactor vessel.
FIGS. 22A and 22B illustrate an alternative embodiment of a reactor design with a swirling fuel salt flow around the interior surface of the reactor vessel.

### DETAILED DESCRIPTION

Although the techniques introduced above and discussed in detail below may be implemented for a variety of molten nuclear fuels, the designs in this document will be described as using a molten fuel salt and, more particularly, a molten chloride salt of plutonium and sodium chlorides. However, it will be understood that any type of fuel salt, now known or later developed, may be used and that the technologies described herein may be equally applicable regardless of the type of fuel used, such as, for example, salts having one or more of U, Pu, Th, or any other actinide. Note that the minimum and maximum operational temperatures of fuel within a reactor may vary depending on the fuel salt used in order to maintain the salt within the liquid phase throughout the reactor. Minimum temperatures may be as low as 300-350 °C and maximum temperatures may be as high as 1400 °C or higher.

Before the low power, fast spectrum nuclear reactor designs and operational concepts are disclosed and described, it is to be understood that this disclosure is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments of the nuclear reactor only and is not intended to be limiting. It must be noted that, as used in this specification, the singular forms "a," "an," and "the" include plural referents unless the context clearly dictates otherwise. Thus, for example, reference to "a lithium hydroxide" is not to be taken as quantitatively or source limiting, reference to "a step" may include multiple steps, reference to "producing" or "products" of a reaction should not be taken to be all of the products of a reaction, and reference to "reacting" may include reference to one or more of such reaction steps. As such, the step of reacting can include multiple or repeated reaction of similar materials to produce identified reaction products.

As used herein, two components may be referred to as being in "thermal communication" when energy in the form of heat may be transferred, directly or indirectly, between the two components. For example, a wall of container may be said to be in thermal communication with the material in contact with the wall. Likewise, two components may be referred to as in "fluid communication" if a fluid is transferred between the two components. For example, in a circuit where liquid is flowed from a compressor to an expander, the compressor and expander are in fluid communication. Thus, given a sealed container of heated liquid, the liquid may be considered to be in thermal communication (via the walls of the container) with the environment external to the container but the liquid is not in fluid communication with the environment because the liquid is not free to flow into the environment.

### Experimental Reactor Designs

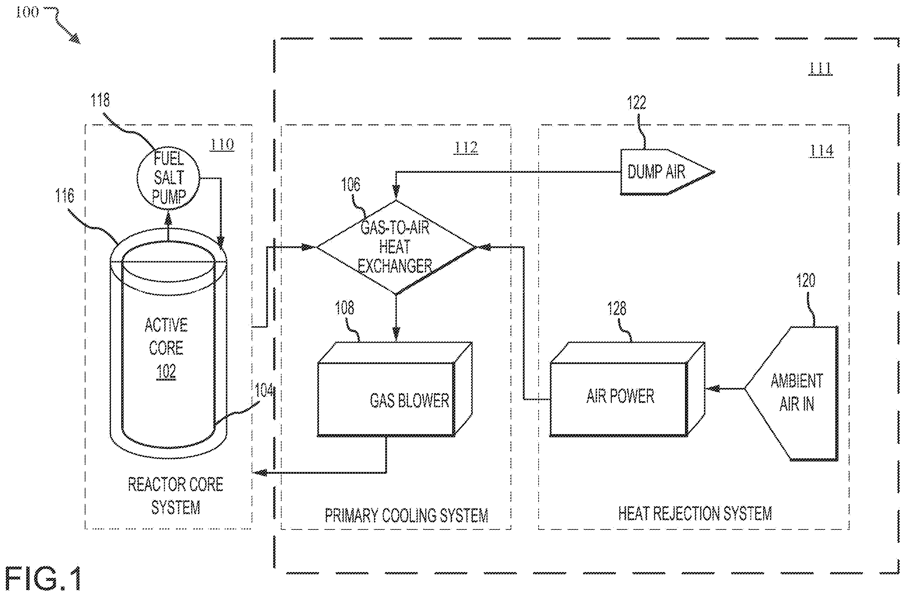

FIG. 1 illustrates a functional block diagram of pool-type reactor 100 designed for use with a molten nuclear fuel. In the embodiment shown, the reactor 100 includes a reactor system 110, a primary cooling system 112, and a heat rejection system 114. The reactor system 110 generates heat through fission of a molten salt fuel. The heat is removed from the reactor system 110 via the primary cooling system 112. That removed heat is then discharged into the atmosphere by the heat rejection system 114. Although embodiment 100 illustrated is designed for use with a chloride fuel salt such as a uranium, a plutonium, a thorium or a combination chloride fuel salt, alternative embodiments of the reactor may be designed for use with any fuel salt such as fluoride fuel salt and fluoride-chloride fuel salts. Examples of nuclear fuel salts include mixtures of one or more fissionable fuel salts such as PuCl₃, UCl₄, UCl₃F, UCl₃, UCl₂F₂, ThCl₄, and UClF₃, with one or more non-fissile salts such as NaCl, MgCl₂, CaCl₂., BaCl₂, KCl, SrCl₂, VCl₃, CrCl₃, TiCl₄, ZrCl₄, ThCl₄, AcCl₃, NpCl₄, AmCl₃, LaCl₃, CeCl₃, PrCl₃, and NdCl₃. For example, PuCl₃- NaCl, UCl₃-NaCl and UCl₃-MgCl₂ salts are contemplated.

The reactor system 110 includes a reactor core 102. The reactor core 102, during operation, is a central, open channel that contains a volume of molten fuel where the density of fast neutrons (neutrons with energy of 0.5 MeV or greater) is sufficient to achieve criticality. The size and shape of the channel is defined by a neutron reflector assembly within the reactor vessel. The reflector assembly surrounds the reactor core 102 and acts to reflect fast neutrons generated in the core 102 back into the core 102, thereby increasing the fast neutron density. The reflector assembly is discussed in greater detail with reference to subsequent figures.

The size of the reactor core 102 is selected based on the type of fuel being used, that is, the volume is sufficient to hold the necessary amount of molten fuel to achieve critical mass in the reactor core 102. In an embodiment, during operation the reactor core 102 is unmoderated, that is, the reactor core contains no moderator rods or other moderator elements so as not to reduce the energy of fast neutrons in the core. In one embodiment, the reactor core 102 contains only molten fuel. That the reactor core 102 can achieve criticality from the molten fuel within the core itself in one aspect that separates the fast reactor designs herein from thermal reactors and from fast reactors that use a collection of individual fuel pins that, during operation, each contain a small amount of molten fuel insufficient to achieve criticality, but when collected into a fuel assembly in sufficient numbers can form a critical mass.

The core 102 and the reflector assembly are surrounded by a reactor vessel 104 which, in the embodiment shown, is itself inside a shielding vessel 116. The reactor 100 is referred to as pool-type to indicate that molten fuel is contained within reactor vessel 104, which forms a pool that is filled with liquid molten fuel when in operation. Solid components, such as elements of the reflector assembly, may be within the pool formed by the reactor vessel 104 and may take up some of the volume within the reactor vessel 104. Such components are referred to herein as displacement elements because they displace fuel from the space they take up within the reactor vessel. Some displacement elements may perform no other function than to take up space within the reactor vessel. Other displacement elements, like the reflector assembly, may also perform functions such as directing the circulation of molten fuel and affecting the neutronics of the reactor core in addition to displacing molten fuel within the reactor vessel 104.

In an embodiment, the shielding vessel 116 provides additional neutron shielding around the reactor core as an added level of safety and may also serve as a secondary containment vessel in case of a rupture in the reactor vessel. In an embodiment, the reactor vessel 104 and the shielding vessel 116 are made of solid steel. Based on the operating conditions, which will at least in part be dictated by the fuel selection, any suitable high temperature and corrosion resistant steel, such as 316H stainless, HT-9, a molybdenum alloy, a zirconium alloy (e.g., ZIRCALOY^{™}), SiC, graphite, a niobium alloy, nickel or alloy thereof (e.g., HASTELLOY^{™} N, INCONEL^{™} 617, or INCONEL^{™} 625), or high temperature ferritic, martensitic, or stainless steel and the like may be used. Materials suitable for use as shielding includes steel, borated steel, nickel alloys, MgO, and graphite. For example, in an embodiment all molten fuel-contacting (salt-wetted) components may be made of or cladded with INCONEL^{™} 625 (UNS designation No6625) to reduce the corrosion of those components.

In the embodiment shown, one or more pumps 118 are provided to circulate the molten fuel. In an alternative embodiment, the reactor system 110 is designed to operate under natural circulation and no pump is provided. During operation heated fuel is circulated between the reactor core 102 where fission heat is generated and the interior surface of the reactor vessel 104 where the fuel is cooled and the fission heat is removed.

The reactor vessel 104 is cooled by a primary cooling system 112. When operating at steady state the temperature within the reactor core 102 remains stable, with the excess heat generated by fission being removed by the primary cooling system 112. In an embodiment, the primary cooling system 112 consists of one or more cooling circuits (only one circuit is shown in FIG. 1) in which each circuit includes a heat exchanger 106 and a coolant blower 108. Alternatively, a liquid coolant could be used in conjunction with a liquid-to-air heat exchanger and a pump. The coolant blower 108 forces cool primary coolant gas past the exterior surface of the reactor vessel 104 by flowing the coolant through a space provided between the reactor vessel 104 and the shielding vessel 116 for the primary coolant. Heat is removed from the reactor vessel 104 by passing the primary coolant along the exterior surface of the reactor vessel. Although some heat may be lost to parasitic losses, at steady state most if not all heat generated in the reactor core 102 is removed by the primary coolant system 112. To assist in the transfer of heat, fins, pins, dimples, or other heat transfer elements may be provided on the exterior surface of the vessel 104 to increase the surface area of the exterior surface exposed to the primary coolant as will be discussed in greater detail below.

The heated primary coolant then flows to the heat exchanger 106. Heated primary coolant gas passes through the heat exchanger 106 where the primary coolant gas is cooled and the air is heated. Cooled primary coolant is then recirculated to the reactor system 110 to form a primary coolant flow circuit.

In an embodiment, an inert gas, e.g., nitrogen or argon, is used as the primary coolant gas. However, any gas may be used. In an alternative embodiment, the reactor 100 may be designed to use any fluid, either gas or liquid, as the primary coolant.

The heat rejection system 114 uses air as the working fluid. The heat rejection system 114 takes in ambient air at an ambient temperature and pressure. Using an air blower 128, the ambient air is passed through the heat exchanger 106 where it received heat from the heat coolant. The now-heated air from the heat exchanger 106 is then vented to the environment. Similar to the primary cooling system 112, the heat rejection system 114 may include multiple, independent heat rejection circuits (again, only one is shown in FIG. 1). Each heat rejection circuit may include its own dedicated and independently controllable blower 128, air intake 120, heated air discharge vent 122 and associated piping/ducting.

In an embodiment, multiple independent cooling circuits and heat rejection circuits may be used. For example, in an embodiment four separate and independent cooling circuits are used. In addition, an independent heat rejection circuit may be provided for each cooling circuit. In other embodiments, instead of four independent pairs of primary cooling/heat rejection circuits, there are two, three, five, six, seven, eight, nine, ten, or more independent pairs of primary cooling system 112 and heat rejection system 114. However, a one-to-one correspondence of primary cooling circuits to heat rejection circuits is not necessary. For example, in an embodiment the reactor 100 may have four primary cooling circuits but only two heat rejection circuit in which each heat rejection circuit serves two primary cooling circuits. Other configurations are possible.

An aspect of this design is that the low power output of the reactor makes it feasible to reject the excess heat from the fission to the environment. In the embodiment shown, the primary cooling system 112 is provided as a safety system to contain the primary coolant in case there may be any release of nuclear fuel or fission products from the reactor system 110 into the primary coolant circuit. In an alternative design, the heat may be rejected directly to the environment by discharging the primary coolant directly to the environment. This embodiment essentially eliminates the primary cooling system 112 so that heat is removed by the heat rejection system 114, although such a design may need additional safeguards such as an emergency shutoff system to meet safety requirements. In such an embodiment air may be used as the primary coolant. In an alternative embodiment, water may be used as the primary coolant and the blower 128 replaced with a pump 128 that discharges heated water into the environment.

Alternatively, the heat removed from the reactor could be used beneficially to provide thermal energy to other systems. For example, in an embodiment the primary coolant could be passed to a thermal energy system for reuse as thermal energy in the reactor facility.

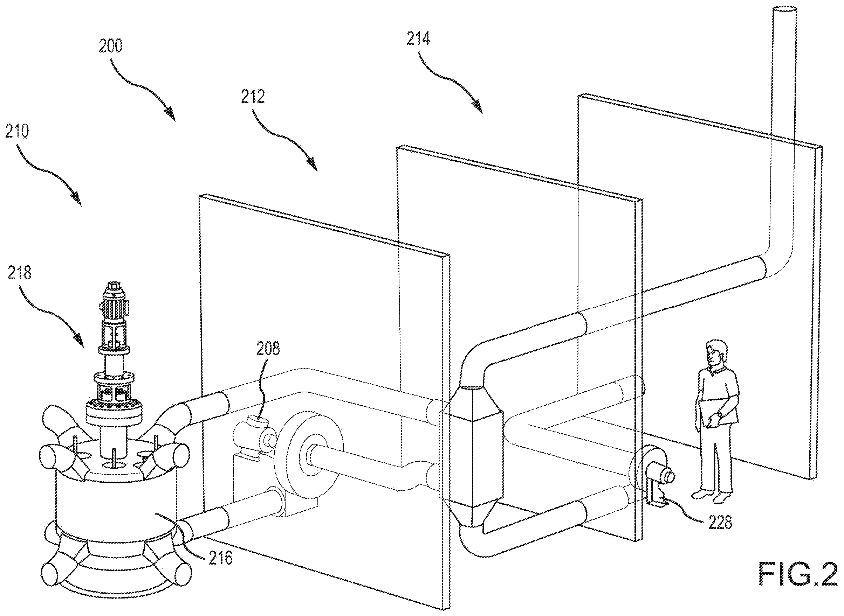

FIG. 2 illustrates a rendering of one possible physical implementation of a reactor as shown in FIG. 1. In FIG 2, the physical components of the systems are illustrated, such as the coolant gas blower 208, air blower 228, fuel salt pump assembly 218 and the shielding vessel 216, as well as some of the piping/ducting connections between the systems.

In the physical implementation shown, the reactor system 210 is provided with four cooling circuits 212 and heat rejection circuits 214, although only one of each is illustrated. The reactor system 210 is provided in a central room and each primary cooling circuit 212 and heat rejection circuit 214 are separated by walls from the reactor system 210 and the other circuits for containment.

Each cooling circuit 212 includes a gas-to-air heat exchanger 230 and a coolant gas blower 208. The coolant gas blower 208 drives coolant gas flow around the circuit 212. As described above, in the circuit coolant gas passes across the exterior surface of the reactor vessel where it is heated and then goes to the gas-to-air heat exchanger 230 in which heat is transferred to the air in an associated heat rejection circuit 214. The circuit then returns the cooled coolant gas to the reactor to be reheated. In the embodiment shown, the coolant gas blower 208 is shown in the cooled coolant leg of the circuit 212. In an alternative embodiment the coolant gas blower 208 may be in the heated coolant leg of the circuit 212.

Each heat rejection circuit 214 includes an air blower 228 that brings in ambient air from the environment, passes the air through the gas-to-air heat exchanger 230, after which the heated air is discharged to the environment. In the embodiment shown, the air blower 228 is shown in the ambient air leg of the circuit 214. In an alternative embodiment the air blower 228 may be in the heated air leg of the circuit 214.

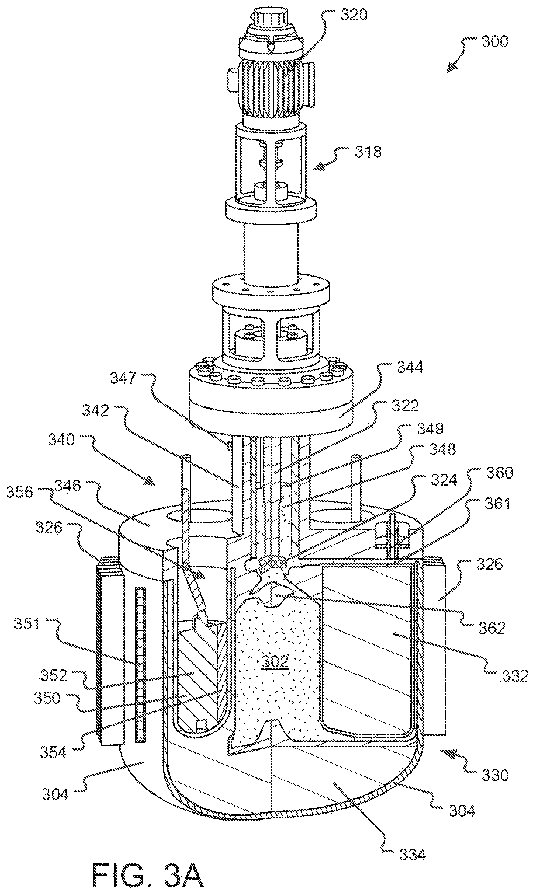

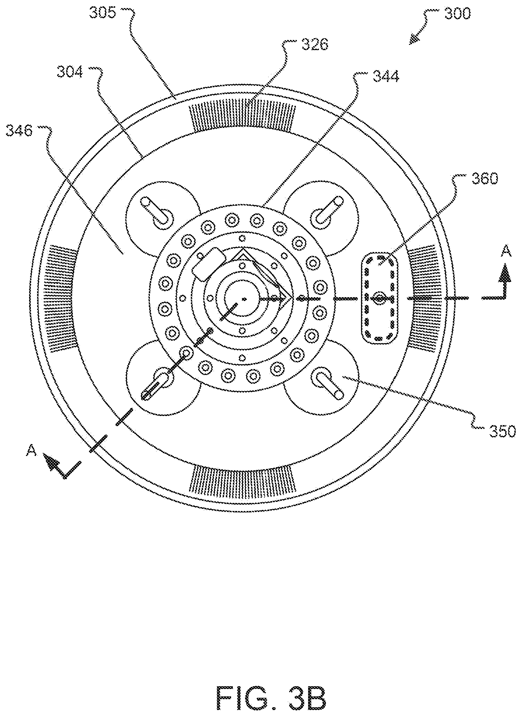

FIGS. 3A-3D illustrate an embodiment of the reactor system of FIG. 1. FIG. 3A illustrates a cutaway view along section A-A shown in FIG. 3B. The cutaway view illustrates the reactor vessel 304 and some of the reactor vessel's internal components (the shielding vessel 305 is not shown in FIG. 3A). In the embodiment shown, the reactor system 300 uses a molten chloride fuel salt as nuclear fuel. The reactor system 300 has a single molten salt pump assembly 318 to circulate the fuel salt through a central active reactor core 302 and into four individual fuel salt flow circuits. Although four individual flow circuits are illustrated, any number of fuel salt flow circuits may be used. For example, the fuel salt exiting the reactor core may divided into two, three, four, five, six, eight or twelve individual circuits as desired by the reactor designer.

The pump assembly 318 includes a pump motor 320 that rotates a shaft 322 with an impeller 324 attached to the shaft's distal end. In an embodiment, rotation of the impeller 324 drives the flow of fuel salt upward through the central reactor core and, in heat transfer sections, downward along the interior surface of the reactor vessel 304 in four heat exchange ducts, although in an alternative embodiment the flow may be reversed. The pump assembly 318 is discussed in greater detail below.

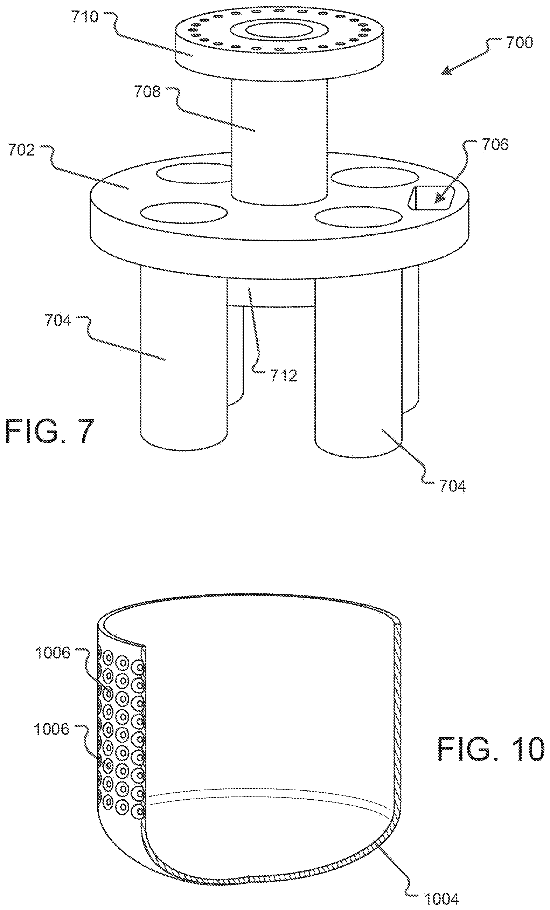

The reactor vessel 304 is provided with fins 326 on the exterior surface as shown. The fins 326 assist in transferring heat from the reactor vessel 304 to the coolant. Alternatively, any high surface area feature may be used instead of or in addition to the fins, such as a dimpled jacket (as shown in FIG. 10) or alternating pins. In the embodiment shown the fins 326 are on four sections of the exterior of the lateral wall of the reactor vessel 304, which are the only sections of active heat removal (heat transfer regions) from the reactor vessel 304. The fins 326 are located opposite the flow paths of the down-flowing fuel salt (the heat exchange ducts 306) and on those portions of the lateral wall of the reactor vessel 304 that are not in contact with the fuel salt there are no fins. However, in an alternative embodiment, fins 326 are provided on the entire exterior surface of the vertical walls of the reactor vessel regardless of the location of heat transfer regions of the reactor vessel 304. In yet another embodiment, fins or other heat transfer elements are provided around the entire lateral and bottom surface of the reactor vessel. In yet another embodiment, heat may be transferred between the fuel salt and the primary coolant via a heat exchanger.

Surrounding the active core laterally and on the bottom is a neutron reflector assembly 330. The reflector assembly 330 includes a radial reflector 332 defining the lateral extend of the reactor core 302 and a lower, axial reflector 334 defining the bottom of the reactor core 302. In an embodiment, the neutron reflector assembly 330 consists of solid bricks or compacted powder of reflector material contained within a reflector structure which acts as a container of the reflector material. In one aspect, the neutron reflector assembly 330 may be considered a large container that acts as displacement volume, i.e., it displaces salt within the reactor vessel thereby defining where the fuel salt may be in the reactor vessel. The neutron reflector assembly 330 is discussed in greater detail below.

In the embodiment shown, a vessel head 340 provides some additional neutron reflection. In an alternative embodiment, additional reflector material may be incorporated into the vessel head 340 or between the vessel head and the radial reflector 332. For example, in an embodiment the reflector assembly 330 includes an upper axial reflector 336 between the vessel head 340 and the radial reflector 332. Likewise, external shielding (not shown in FIG. 3A) around the reactor may be provided for additional safety.

In the embodiment shown, the vessel head 340 includes a main deck 346 a hollow upcomer 342 ending in a flange 344 to which the pump assembly 318 attaches. The main head deck 346 sealingly covers the reactor vessel 304 and, in the embodiment shown, includes control drum wells (See FIG. 7). The shaft 322 between the motor and the impeller is contained within the upcomer 342. The upcomer 342 defines a chamber above the impeller that is in fluid communication with the fuel salt in the reactor. The chamber is referred to as the expansion chamber 348 and contains the free surface level 349 of the fuel salt in the reactor system 300. During operation the headspace in the expansion chamber 348 above the fuel salt is filled with an inert cover gas. A cover gas management system is provided (not shown) that controls the pressure of gas within the expansion chamber 348 and also cleans the cover gas as needed. The pressure in the cover gas can also be used to cause the fuel salt to be forced out of the reactor vessel 304 through access/removal ports (not shown in FIGS. 3A-D) provided to deliver and remove liquid from the reactor vessel 304.

The level 349 of the fuel salt in the expansion chamber 348 will change as the fuel salt expands and contracts (such as during startup and shutdown) and the level 349 may be used as an indicator of the current operational state or condition of the reactor system. Monitoring devices may be provided that indicate the height of the free surface level 349 of the fuel salt during operation. Control decisions, such as to open or close one or more flow restriction devices 360 (discussed below), rotation of the control drums 350, or to increase or decrease the flow and/or temperature of coolant to the reactor system 300 may be made based, in part or completely, on the basis of the output of the level monitoring device. For example, in an embodiment a range of free surface levels 349 indicative of standard operation may be targeted and one or more control decisions as discussed above may be made automatically by a controller so as to keep the fuel salt level within the targeted range.

An overflow port 347 may be provided in the upcomer 342 to remove excess fuel salt to a fuel salt overflow tank (not shown).

During subcritical, non-fission heated operation, the fuel salt in the reactor system 300 may be maintained at temperature above the fuel salt melting point. In an embodiment, this may be accomplished by using electrical heaters 351 mounted on the exterior of the reactor vessel 304 and/or vessel head 340. For example, in one embodiment heaters 352 are provided in the space between the reactor vessel 304 and the shielding vessel 305, in locations between the fins 326. Alternatively, a heater 351 could be included in the primary cooling system, e.g., in each cooling circuit, and used to heat the primary coolant (gas/liquid) which, in turn, heats the reactor system 300 to maintain the fuel salt at the desired temperature. In other words, the primary cooling system could also be used as the initial heating system to heat up and/or maintain the reactor system 300 at the appropriate temperature when the reactor is subcritical.

Reactivity control of the reactor system 300 is realized via one or more independently rotated control drums 350. In the embodiment shown four control drums are used, although any number and configuration of control drums may be used. The control drums 350 are cylinders of a reflector material 352 and provided with a partial face 354 made of a neutron absorber. The reflector assembly 330 defines a receiving space for each control drum 350 as shown allowing the control drums 350 to be inserted into the reactor vessel 304 laterally adjacent to the reactor core 302. The control drums 350 can be independently rotated within the reflector assembly 330 so that the neutron absorber face 354 may be moved closer to or farther away from the active reactor core 302. This controls the amount of fast neutrons that are reflected back into the core 302 and thus available for fission. When the absorber face 354 is rotated to be in proximity to the core 302, fast neutrons are absorbed rather than reflected and the reactivity of the reactor system 300 is reduced. Through the rotation of the control drums, the reactor may be maintained in a state of criticality, subcriticality, or supercriticality.

Although shown as control drums 350, in an alternative embodiment, insertable control rods or sleeves of neutron reflector or absorbing materials may be used instead of or in addition to control drums 350. In addition, additional control elements for emergency use may be provided including, for example, one or more control rods of absorbing material that could be inserted/dropped into the reactor core 302 itself in case of emergency.

Additionally, although the control drums 350 are illustrated as cylinders that substantially fill the drum chambers or wells 356 (see also FIG. 7), the control drums 350 could be any shape and need not entirely fill the drum wells 356. For example, in an embodiment the drums have a crescent-shaped horizontal cross section where the crescent shape allows for easier insertion and removal around the pump flange of the vessel head.

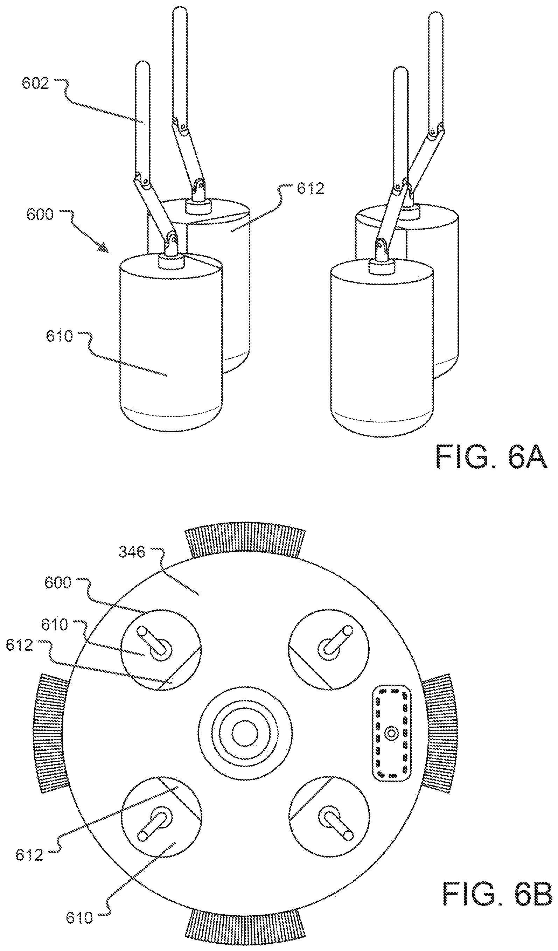

In yet another embodiment, instead of an absorbing face 354, the control drums 350 may include a volume for the insertion and removal of a liquid absorbing material. In this embodiment, the control drums 350 or the drum wells 356 may be provided with one or more empty volumes which may be filled with liquid absorber to control the reactivity of the reactor system 300. For example, the control drums 350 shown in FIG. 6B may be static, but the location of the absorbing face 354 may be empty of absorber during operation and filled with liquid absorber to reduce the reactivity to subcritical during times of shutdown.

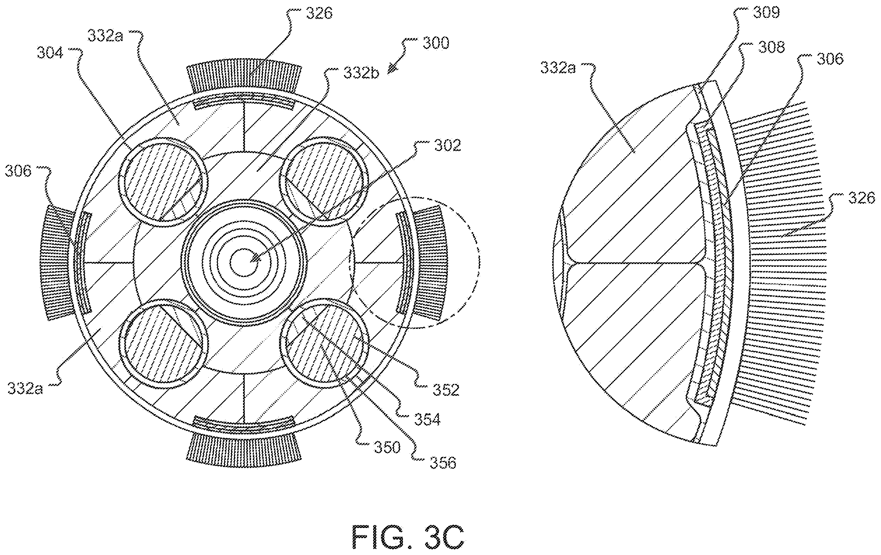

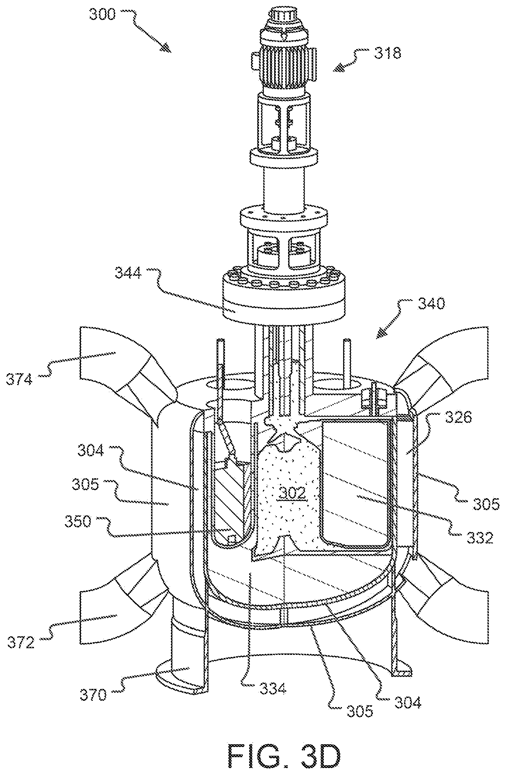

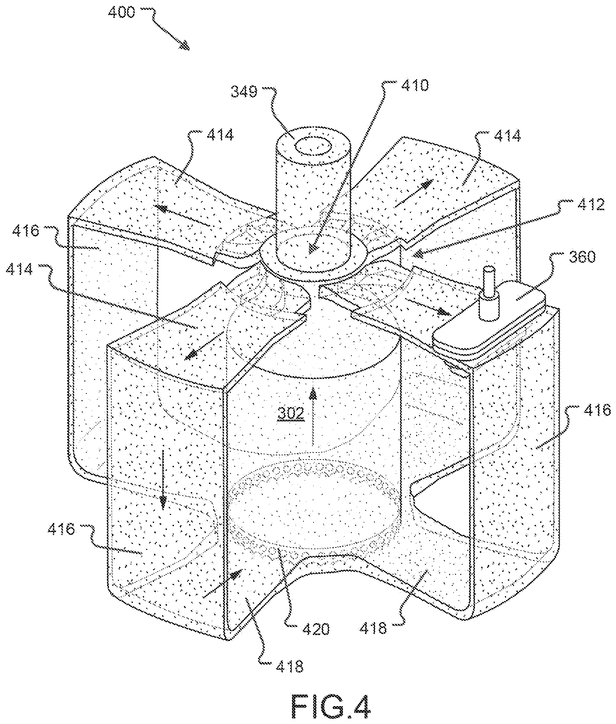

An optional flow restriction device 360 controlling the flow of fuel salt in one of the fuel salt circuits is illustrated in FIG. 3 and FIG. 4. The flow restriction device 360 is located at the top of one of the four fuel salt upper flow channels 361 between the active core 302 and the reactor vessel interior surface of the reactor vessel 304. Although only one flow restriction device 360 in one of the four flow circuits is shown, in alternative embodiments some of the other or all of the fuel salt flow circuits may also be furnished with such devices. The molten salt flow restriction device 360 (which may be any one of a valve, gate valve, sluice gate, pinch valve, etc. - a gate valve is shown) allows the flow rate of fuel salt through the circuit to be controlled. The flow restriction device 360 may be used to induce asymmetries in the flows entering the active core 302, as well as to modify the effective delayed neutron fraction by varying the amount of delayed neutron precursors flowing (advecting) outside of the active core. This allows the operation of the reactor 300 to be varied in order to investigate different operating scenarios and reactor conditions.

Another custom feature of the reactor system 300 is the design of the pump suction region below the impeller 324. Rather than having the flow come directly into the impeller 324 from the center of the reactor core 302, a contoured plug 362 directly below the impeller 324 is provided between the impeller 324 and the reactor core 302. In an embodiment the plug 362 is supported by one or more vertical and/or horizontal members. The plug 362 may be incorporated into the reflector assembly 330 or, alternatively, may be part of the pump assembly 318 or the vessel head 340 (as illustrated in FIGS. 3A, 3D and 7, the plug and pump chamber are incorporated into the vessel head 340). In an embodiment, the plug 362 is made of a shield material such as INCONEL^{™} 625. In an alternative embodiment, the plug 362 is made of a reflective material such described for the radial reflector. The molten fuel flow rising through the reactor core 302 is directed around this plug 362, through one or more annular entrance regions, and then up into the pump impeller 324. This design serves multiple purposes. First, the plug 362 acts as a de facto upper reflector or shield for (and can be considered as defining the top of) the reactor core 302 and provides radiation shielding between the high flux region of the reactor core 302 and the impeller 324 of the pump. Second, the support members supporting this pump suction plug 362 can also be tailored to provide optimum inlet conditions for the pump, potentially reducing or enhancing swirl, as necessary.

FIG. 3B illustrates a plan view of the top of the reactor system 300. In the embodiment shown, the pump and vessel head flanges overlap slightly with the position of the control drums 350. In addition, as illustrated the fins 326 on the exterior of the reactor vessel 304 do not extend to the shielding vessel 305 and the space between the two vessels 304, 305 is a continuous gas space filled with the primary coolant. This is but one possible embodiment. In an alternative embodiment, the fins 326 are in contact with the shielding vessel 305. In another embodiment, the four finned areas are separate coolant flow channels and the annular space between the fin locations are either static volumes (filled with solid material such as a neutron absorber material or an inert gas) or may contain heating elements.

FIG. 3C illustrates a horizontal sectional view of the reactor through the middle of the reactor core 302 and detail of the fins 326 on the reactor vessel 304. FIG. 3C also shows the fuel salt path on the interior surface of the reactor vessel opposite the fins in the heat transfer region. Again, the control drums 350 are shown in the least reactive configuration.

FIG. 3C also illustrates additional detail of an embodiment of the radial reflector 332. In the embodiment shown, the radial reflector 332 is made of five separate pieces including a central annulus reflector 332a with cutouts for receiving the control drums 350 on the exterior of the annulus. Four outer arcuate reflectors 332b are then spaced around the outside of the central annulus reflector 332a. In the embodiment shown, an outer structure 309 retains the reflector material of the arcuate reflectors 332b. In one design, the arcuate reflectors 332b are solid, while in another embodiment the reflectors 332b.

FIG. 3C also illustrates additional detail of an embodiment of the heat exchange ducts 306. In the embodiment shown, a cladding 308 is provided between the heated fuel salt duct 306 and the radial reflector 332a, which, in the embodiment shown, is illustrated on the exterior of the reflector structure 309. The cladding 308 is made of material that resists corrosion from the nuclear fuel.

FIG. 3D illustrates an embodiment of the reactor system 300 in a cutaway view showing the shielding vessel 305, the reactor vessel 304 and some of the reactor system's internal components. In the embodiment shown, the reactor vessel 304 is supported by a support skirt 370. In addition, the primary coolant piping/ducting in and out of the space between the shielding vessel 305 and the reactor vessel 304 is illustrated showing the direction of flow of the coolant gas. In the embodiment shown, the cold coolant flows through a lower coolant inlet duct 372, upwardly through the region between the shielding vessel 305 and the reactor vessel 304 and over the fins 326, and then heated coolant exits via a coolant outlet duct 374. A separate coolant circuit is provided for each set of fins 326 with the outlet and inlet ducts 374, 372 located directly above and below the fins, respectively.

FIG. 3D illustrates the volume above the control drums 350 as being empty. In an alternative embodiment, this volume may be filled with an appropriately-shaped reflector to provide additional reflection in the reactor core. The reflector is removable and does not interfere with the rotation of the drum.

FIG. 4 illustrates the fuel salt volume and flow circuits within the reactor 300 of FIG. 3. FIG. 4 illustrates the entire volume 400 of salt contained within the reactor system 300. In addition to the flow paths, FIG. 4 shows outline of the pump stator (in the form of directing vanes 412), a flow restriction device 360 (in the form of a gate valve) in one flow channel, and flow conditioner 420 (in the form of an orifice ring plate).

During operation heated fuel salt flows upwardly through the reactor core 302, into the impeller chamber 410. The rotating impeller 324 (not shown in FIG. 4) drives the fuel salt (illustrated by the arrows) through the directing vanes 412 of the pump stator where the fuel salt flow is separated into one of four upper, heated fuel salt exit channels 414. The exit channel 414 carries the fuel salt over the radial reflector 332 to a heat exchange duct 416. In the embodiment shown, the upper, heated fuel salt exit channels 414 are narrower in width closest to the pump impeller 324 and widen as they approach the reactor vessel 304.

The heat exchange duct 416 is a channel between the radial reflector 332 and the interior surface of the reactor vessel 304 extending from near the top of the radial reflector 332 to the roughly the bottom of the radial reflector 332. In an embodiment, one wall of the heat exchange duct 416 is formed by the reactor vessel 304 so that fuel downwardly flowing through the heat exchange duct 416 is in direct contact with the reactor vessel 304 and, thus, in thermal communication with the coolant on the other side of the reactor vessel 304.

Fuel salt exits the heat exchange duct 416 via a lower, cooled fuel salt delivery channel 418. The lower, cooled fuel salt delivery channel 418 is a channel through the reflector assembly 330 between the lower axial reflector 334 and the radial reflector 332. The lower, cooled fuel salt delivery channel 418 delivers the now cooled fuel salt from the heat exchange duct 416 into the bottom of the reactor core 302.

A flow conditioner 420 may be provided at or near where the cooled fuel salt enters the reactor core 302 from the lower, cooled fuel salt delivery channel 418. The flow conditioner 420 ensures the flows entering the active core are well-distributed, without jet-like behavior or major eddies or recirculations, as the flow turns the corner inside the lower edge of the radial reflector 332. In the embodiment shown, the flow conditioner 420 is an orifice plate designed to optimize the flow of the cooled fuel salt. In an alternative embodiment, the flow conditioner 420 may take an alternative form such as directional baffles, tube bundles, honeycombs, porous materials, and the like.

FIG. 4 also more clearly shows the fuel salt in the expansion chamber 348 within the upcomer 342 and the free surface level 349 of the fuel salt. The expansion chamber 348 allows heated fuel salt to expand in the volume during operation.

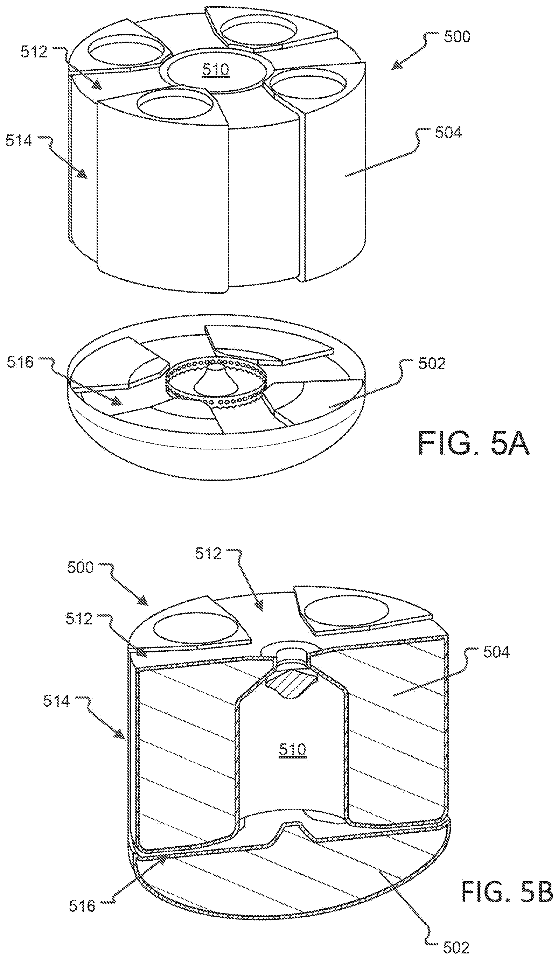

FIGS. 5A and 5B illustrate an embodiment of a reflector assembly that could be used in the reactor system of FIG. 3. The neutron reflector assembly 500 is provided in two parts, a lower axial reflector 502 and a radial reflector 504, which when combined together act as an integrated component that performs several functions including: defining the shape and size of the reactor core 302; reflecting fast neutrons from the reactor core back into the reactor core; and, when installed in the reactor vessel, defining the flow circuits of molten fuel within the reactor vessel (see arrows shown in FIGS. 5A).

In an embodiment, individual components of the reflector assembly include a reflector structure, or container, that forms the external surfaces and, thus, the shape of that part of the reflector assembly. The internal volume of the reflector structures are filled, in whole or in part, with reflector material. For example, in an embodiment bricks and/or compacted powder of reflector material are contained within the reflector structures. The reflector structure may be made of steel or any other suitably strong, temperature-resistant, and corrosion-resistant material, as described above with reference to the reactor vessel. The reflector material within the reflector structure may be Pb, Pb-Bi alloy, zirconium, steel, iron, graphite, beryllium, tungsten carbide, SiC, BeO, MgO, ZrSiO₄, PbO, Zr₃Si₂, and Al₂O₃ or any combination thereof.

For example, in the embodiment shown in FIG. 5A the radial reflector 504 may be single structure consisting of the outer shell of steel (as described above) filled with reflector material. In an embodiment MgO is used as the reflector material in the form of bricks (e.g., sintered bricks), compacted powder, or a combination of the two and the reflector structures themselves are made of 316 H stainless steel with fuel-exposed surfaces clad with INCONEL^{™} 625.

The reflector assembly components are designed to accommodate thermal expansion mis-match and swelling, which results from change in temperature and neutron radiation. For a reflector material such as MgO, the neutron reflector fill material may be processed as a powder, which typically has a 66-85% of theoretical density limit. Secondary operations such as reduction in area from drawing and annealing, and vibratory compaction can produce higher densities.

There are several strategies for assembling the reflector assembly components into the reactor vessel. In one strategy, the reflector structures are sized to a desired fit relative to the reactor vessel at the operational temperature. The reactor vessel is preheated using the heater(s) described above and the components of the reflector assembly are then inserted into the vessel. When inserted the components may be at the same temperature or a lower temperature as that of the vessel. The reactor vessel may then be allowed to cool. This will result in a permanent shrink fit between the reactor vessel and reflector assembly and a proper fit at operation temperature. In a second strategy, the reflector structures are sized to a slip fit relative to the reactor vessel at a given temperature, such as room temperature. This will produce a light transitional fit at operating temperature.

FIG. 5B illustrates a section view of the reflector assembly 500 showing the shape reactor core 510, the heated fuel salt exit channels 512, the heat exchange ducts 514, and the cooled fuel salt delivery channels 516 defined by the shape of the radial reflector 504 and axial reflector 502.

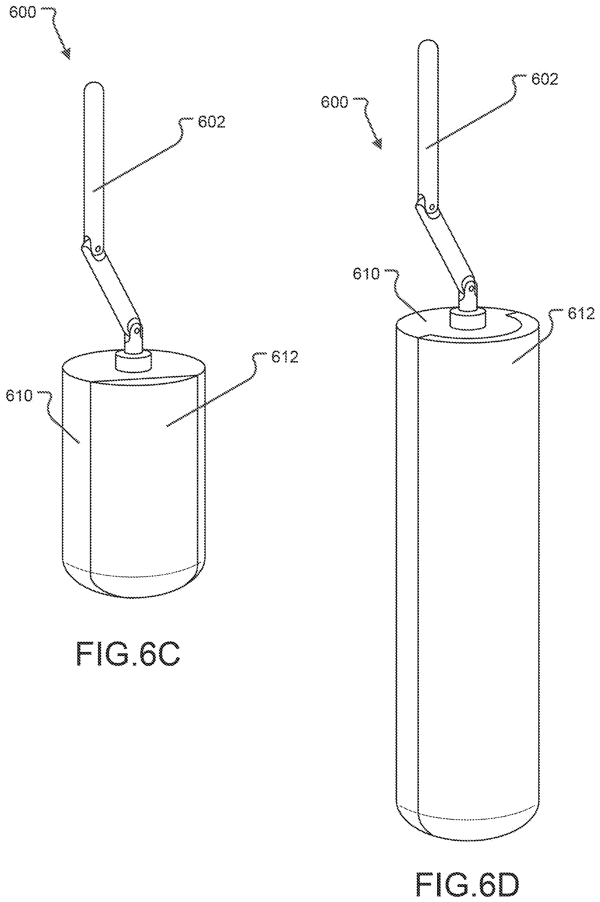

FIGS. 6A, 6B and 6C illustrate an embodiment of the control drums and their use as reactivity control devices. Each control drum 600 includes a retracting and rotating arm 602 as shown in FIG. 6A and 6C. By manipulating the arm 602, a drum 600 may be lowered and raised in its drum space provided in the reflector assembly and, in an embodiment, may be removed completely. In an embodiment, the arm 602 is also capable of rotating the drums by any amount and in either direction.

In the embodiment shown, the drums are made of a reflector material 610, such as described above, and are provided with a face 612 of absorbing material. In an embodiment, the absorbing material is B₄C, however any suitable neutron absorbing material may be used. Other neutron absorbing materials include: cadmium, hafnium, gadolinium, cobalt, samarium, titanium, dysprosium, erbium, europium, molybdenum and ytterbium and alloys thereof. Some other neutron absorbing materials include combinations such as Mo₂B₅, hafnium diboride, titanium diboride, dysprosium titanate and gadolinium titanate.

In an embodiment, similar to the construction of the neutron reflector, the drums are made by creating an outer structure or container, such as of steel, and then filled with the appropriate material in the appropriate section. For example, in an embodiment the drum structure is provided with two volumes one filled with one or more neutron absorbing materials and one filled with one or more neutron reflecting materials.

As discussed above, the rotation of the control drums changes the distance between the absorbing face and the reactor core and also changes the amount of reflecting material between the absorbing material and the reactor core. FIGS. 6A and 6B illustrate the four control drums 600 in the least reactive configuration in which the absorbing faces 612 of each of the four drums are as close as possible to the active core. FIG. 6A illustrates the four drums while FIG. 6B is a plan view of reactor system 300 showing the four drums 600 within the vessel head. This serves to reduce the density of neutrons in the reactor core to the greatest extent possible. In the design of the reactor, the relative size, amount and distance from the core of the absorbing material in this configuration is sufficient to make the reactor subcritical. In an embodiment, the control drums are sized so that they can maintain subcriticality in all possible shutdown conditions and states when rotated into the position shown in FIG. 6B.

FIG. 6D illustrates two views of an alternative embodiment of the control drums having a different design for the absorbing face 612. In this embodiment, the absorbing face 612 is a layer of uniform thickness that extends around roughly half of the drum 600 inside a drum structure that is otherwise filled with reflector material.

FIG. 7 illustrates an embodiment of a vessel head. In the embodiment shown, the vessel head 700 is either a unitary piece as shown or an assembly that includes the head plate 702, wells 704 that insert into the reflector assembly for receiving the control drums, one or more apertures 706 (for example, an aperture for the flow restriction device is shown) for access to the interior of the reactor vessel, the upcomer 708 providing an annular space for the fuel salt expansion volume as discussed above, and a flange 710 to provide connection to the pump assembly. In addition, in this embodiment the pump chamber including the shield plug that protects the impeller is incorporated into the vessel head 700 so that when the vessel head is installed the pump chamber components 712 fit within the top of the central, open channel formed by the radial reflector. The vessel head 700 may be made as a single element, e.g., via 3d printing or milling from a single piece of material, or may be assembled from various elements and attached by welding or other methods. As discussed above, reflector material may be incorporated into the vessel head 700 or a separate upper axial reflector (not shown) could be provided that would be located between the head plate 702 and the reflector assembly shown in FIGS. 5A and 5B.

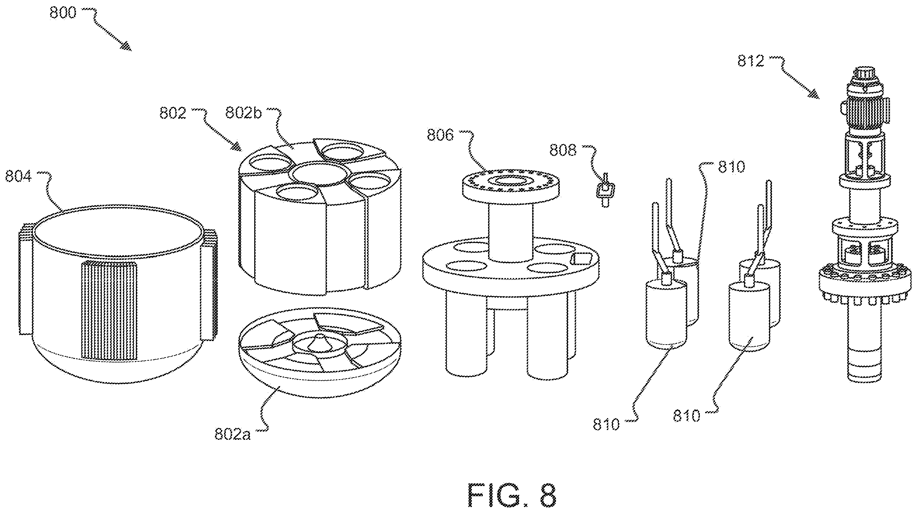

FIG. 8 illustrates the main components of an embodiment of the reactor system in a disassembled view. In the embodiment shown, the reactor system 800 include the reactor vessel 804, the reflector assembly 802 (in two parts: the lower axial reflector 802a and the radial reflector 802b), the vessel head 806, the flow restrictor(s) 808, the control drums 810, and the pump assembly 812. Each component can be independently manufactured off site and then shipped and easily assembled at the desired location. Because the reactor system 800 is designed as a low power reactor, the main components may be kept relatively (for a nuclear reactor) small, allowing for ease of manufacturing, transport, assembly, maintenance, and replacement.

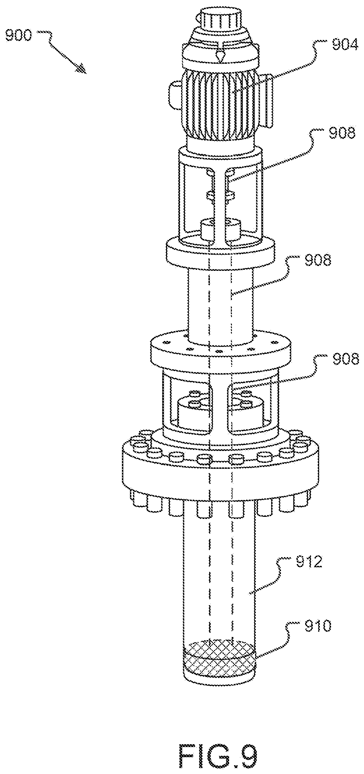

FIG. 9 illustrates the fuel pump assembly 900. As discussed above, the pump assembly 900 includes a motor 904, shaft 908, and impeller 910. The motor is distanced from the reactor core by a motor support structure 906 which the shaft 908 traverses. The fuel salt pump 900 is attached to the vessel head via flange 902. In the embodiment shown, the pump assembly 900 includes a fluid column 912 between the flange 902 and the impeller 910. When installed, the fluid column 912 is inserted into the upcomer of the vessel head and contains the expansion chamber. In an alternative design, the housing is replaced with a support structure that provides the upper portion of that pump stator.

As shown, this pump is a vertical, cantilevered (no salt-wetted bearing) pump having an integrated fluid column 912 with controlled cover gas pressure and a double-mechanical seal. In the embodiment of the pump assembly shown, the impeller 910 is facing downward in a so-called 'end suction' configuration. This orientation supports the layout of the reactor system with the pump pulling flow from above the center of the reactor core and pushing it radially out to the four flow channels. This orientation of the impeller is possible by providing that the fluid column 912 is in fluid communication with the suction side of the pump such that cover gas pressure on the liquid in the column and hydrostatic pressure from the fuel salt above the impeller 910 can be used to provide necessary net positive suction head (NPSH) for the pump. In an embodiment, the system may be run under positive cover gas pressure (i.e., at a pressure greater than 1 atmosphere) to ensure proper operation of the pump.

Given the need to direct the pump discharge from the volute and spread it into one or more high aspect ratio channels (i.e., the four upper, heated fuel salt exit channels 414), the pump incorporates a stator region with curved vanes to smoothly redirect the flow (see FIG. 4). This increases efficiency and impeller 910 stability as compared to a single volute/single exit configuration.

FIG. 10 illustrates a reactor vessel 1004 with dimples 1006 on the exterior surface instead of fins for improved heat transfer. As mentioned above, any heat transfer element may be used to improve the transfer of heat between the reactor vessel 1004 and the coolant at any location where coolant is flowed across the exterior of the reactor vessel. Although not shown, the same is true for the fuel salt and any form of heat transfer element may also be provided on the interior surface of the reactor vessel to improve transfer of heat between the molten fuel and the reactor vessel.

The reactor vessel may also vary in thickness such that it is thicker at locations where heat transfer between the interior of the reactor vessel and the coolant are not desired and thinner in the heat transfer regions. For example, with reference to FIG. 3C the thickness of the reactor vessel 304 where the fins 326 are attached may be thinner than the thickness at any other location of the vessel 304. It should also be noted that the reactor vessel 304 and/or shield vessel 305 may be a single, unitary construction of one material, e.g., steel, or may be a multilayer construction. For example, the reactor vessel may include a structural steel layer with an interior cladding of a different material selected based on its resistance to corrosion by the fuel salt.

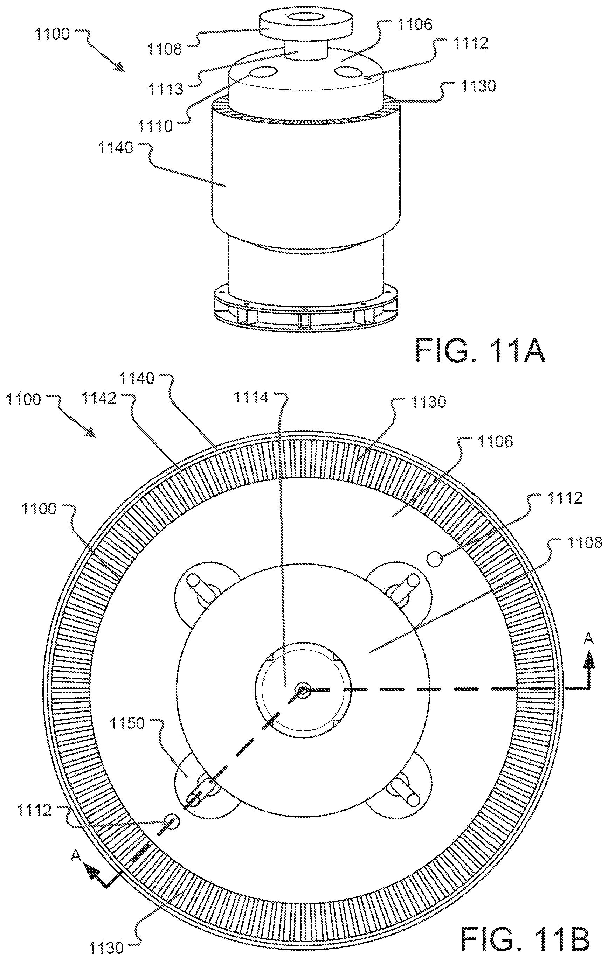

FIGS. 11A-11G illustrate different views of an alternative embodiment of a low power reactor system 1100. Like the systems above, the reactor system 1100 includes a reactor vessel 1104 containing a reflector assembly 1120 that defines a reactor core 1102 within the reactor vessel 1104. The reflector assembly 1120 again includes a lower axial reflector 1122, an upper axial reflector 1144, and a radial reflector 1124.

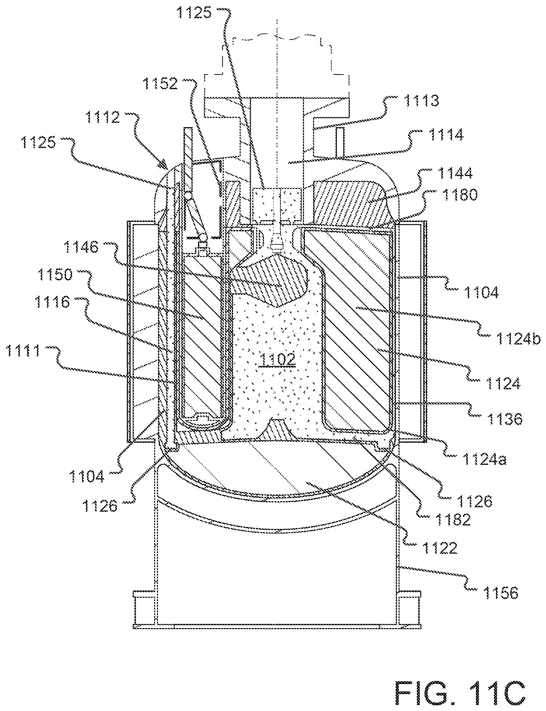

FIG. 11A illustrates an isometric view of the reactor system 1100 showing details of the exterior of the vessel head 1106. FIG. 11B is a plan view of the reactor system 1100. FIG. 11C is a cutaway view of the reactor system 1100 along the section A-A identified in FIG. 11B. Not all parts are referenced in all FIGS.

The vessel head 1106 is similar to that described above and includes a flange 1108 for connection with the pump assembly and an upcomer 1113 containing an expansion chamber 1114. In the vessel head 1106, control drum apertures 1110 giving access to control drum wells 1111 for the control drums are shown along with a fuel port access aperture 1112. In the embodiment shown, the fuel port access aperture 1112 allows the reactor vessel 1104 to be charged and discharged with fuel. The fuel port access aperture provides access to a dip tube 1116 that extends from the vessel head 1106 to the lower axial reflector 1122. In the embodiment shown, the lower end of the dip tube 1116 ends in a collection channel 1126 defined by the lower axial reflector 1122. The collection channel 1126 is the lowest point in the reactor vessel 1104 that is not filled with a displacement element. By connecting the dip tubes 1116 to the collection channel 1126, the reactor system may be easily drained of liquid by pressurizing cover gas of the reactor system 1100. The free surface level 1125 of the molten fuel falls by gravity and collects in the lowest point of the reactor system 1100 accessible by the molten fuel.

In an embodiment, the free surface level 1125 of fuel salt in the reactor system 1100 may be monitored by monitoring the level in dip tube 1116. This removes the need to have monitoring devices incorporated into the upcomer 1113. The measurement may be done using a laser level monitor, conductance monitor, or any other device as is known in the art.

Access via the dip tube 1116 also allows reactivity control through the insertion of liquid absorbers. Liquid absorbers are known in the art and may be added to the molten fuel through a dip tube 1116 in situations where reduced reactivity is desired. For example, lithium is an absorbing material and certain lithium salts are liquid in the operational temperature range contemplated for the reactor system 1100.

In the embodiment shown, the reactor system 1100 differs from the systems shown above by having larger heat exchange ducts 1136 such that almost all of the interior surface of the reactor vessel is in direct contact with the fuel salt and acts as the heat transfer region. As shown in the plan view of FIG. 11B, the fins 1130 on the exterior of the reactor vessel 1104 extend the entire circumference of the vertical walls of the reactor vessel 1104. Likewise, heated fuel salt flows over nearly all of the interior surface of the reactor vessel 1104 opposite the fins 1130. In the embodiment shown, four stand-off ridges 1134 are proved on the exterior of the radial reflector 1124 that contact the reactor vessel, keep the radial reflector centered therein, and, form the lateral boundaries of the four heat exchange ducts 1136. The stand-off ridges 1134 may be solid and continuous, thus separating fuel salt flow between adjacent heat exchange ducts 1136. In an alternative embodiment, the stand-off ridges 1134 may be discontinuous, for example being a series of individual contact points, in which the fuel is allowed to flow between what would otherwise be considered adjacent fuel salt ducts 1136. In yet another embodiment, instead of four stand-off ridges 1134, the radial reflector 1124 may be provided with some number of individual stand-off elements spaced about the exterior of the radial reflector such that the fuel salt flows over substantially all of the exterior surface of the radial reflector 1124.

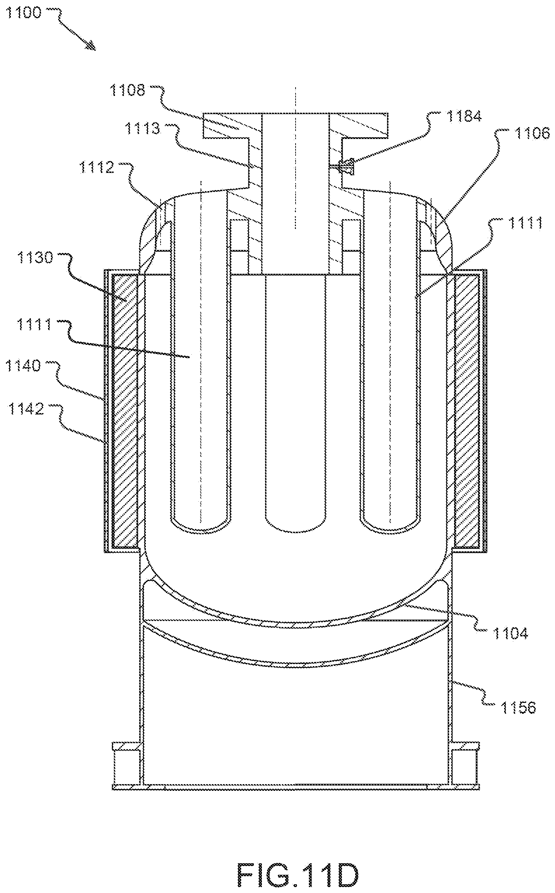

FIG. 11D is a sectional view through the center of the reactor system 1100 illustrating some of the enclosure components in more detail. In the embodiment shown, the finned region on the vertical sides of the reactor vessel 1104 are enclosed in a jacket 1140 through which the coolant is flowed. In an embodiment, the vertical exterior wall of the jacket 1140 is provided with a layer 1142 of either reflecting or absorbing material for additional safety. An overflow port 1184 is provided in the upcomer 1113 in case of overfilling of the reactor system 1100.

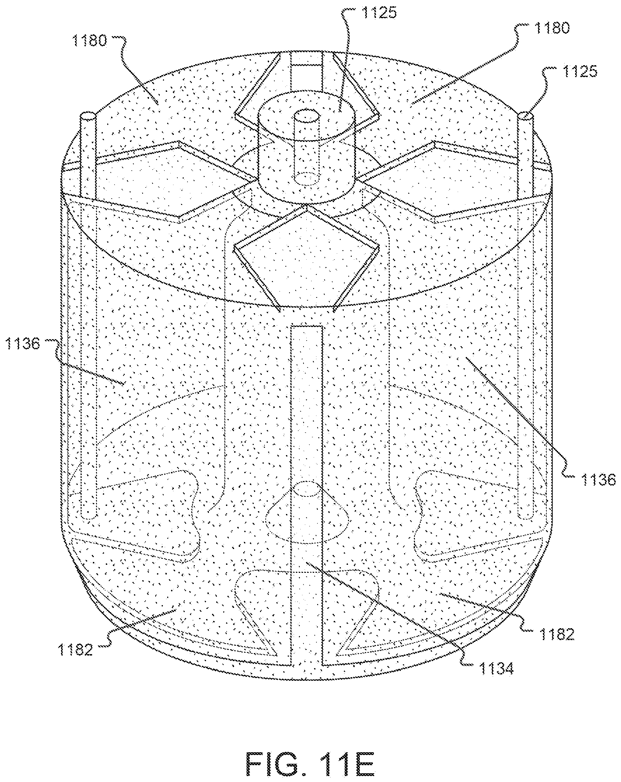

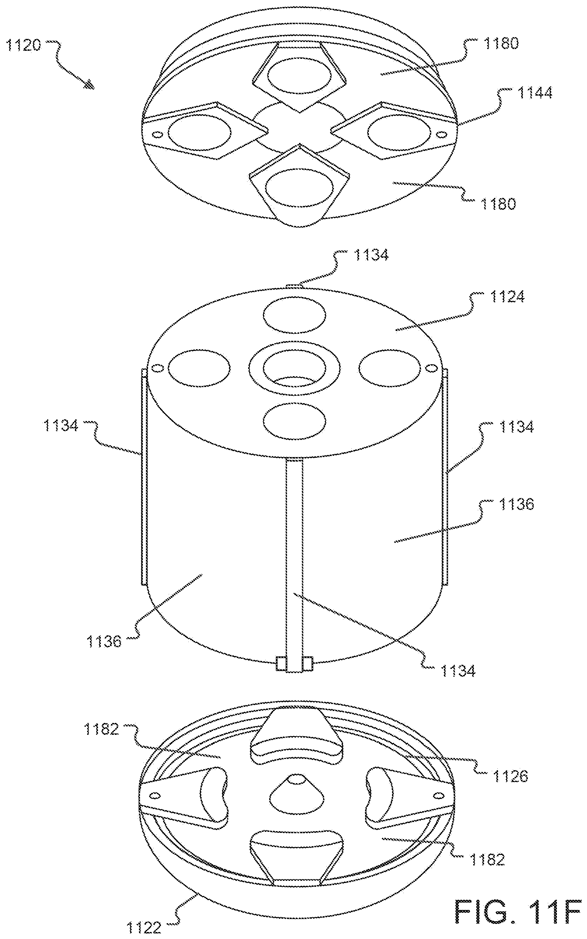

FIG. 11F illustrates the top isometric view of the lower axial reflector 1122 and the radial reflector 1124 and a bottom isometric view of the upper axial reflector 1144 so that the resulting channels defined by the reflector assembly 1120 are readily apparent. The fuel salt facing surfaces are contoured to define the heated fuel salt exit channels 1180 over the top of the radial reflector 1124 and the cooled fuel salt delivery channels 1182 that return cooled salt from contact with the reactor vessel 1104 to the reactor core 1102. FIG. 11E illustrates the shape of the fuel salt volume within the reactor vessel that is the result of the displacement elements shown in FIGS. 11C and 11F.

FIG. 11C provides additional details in embodiments of the reflector assembly components. For example, the radial reflector 1124 is illustrated as a radial reflector shell 1124a containing a reflector material 1124b. In an embodiment, the reflector shell 1124a is made of INCONEL^{™} 625 and the reflector material 1124b includes magnesium oxide. The lower axial reflector 1122 is likewise illustrated as a shell 1122a and interior filled with a reflector material 1122b.

Other aspects of the reactor system 1100 are similar to those described for the above systems. For example, four control drums 1150 are provided for reactivity control that function similar to those described above. A backfill reflector plug 1152 over the control drum 1150 is further illustrated in FIG. 11C.

The overall pump design including the use of a protective plug 1146 between the impeller and the reactor core are also similar to those described above. In the embodiment shown in FIG. 11C, the plug 1146 is made of shield material and incorporated into the radial reflector 1124. A lower skirt 1156 is provided that supports the bottom of the reactor vessel 1104.

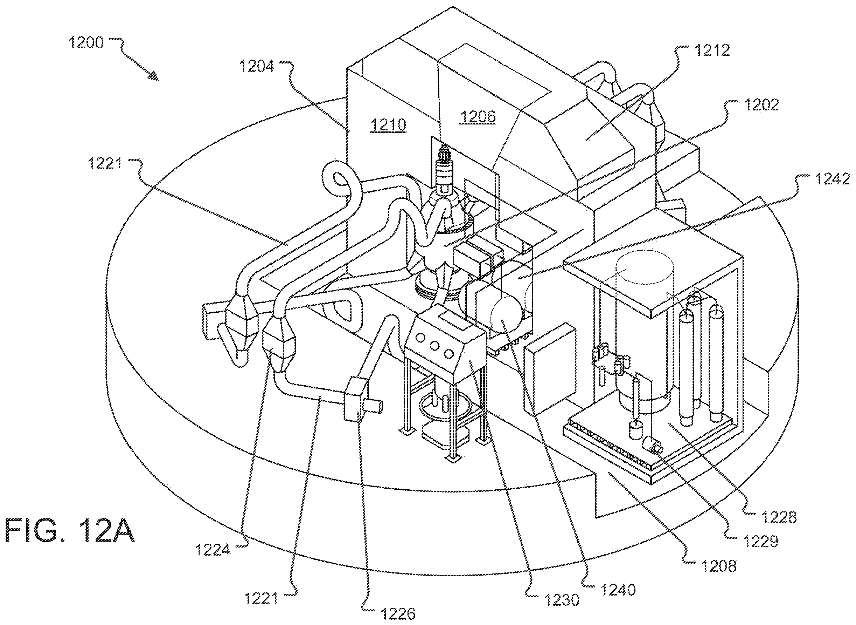

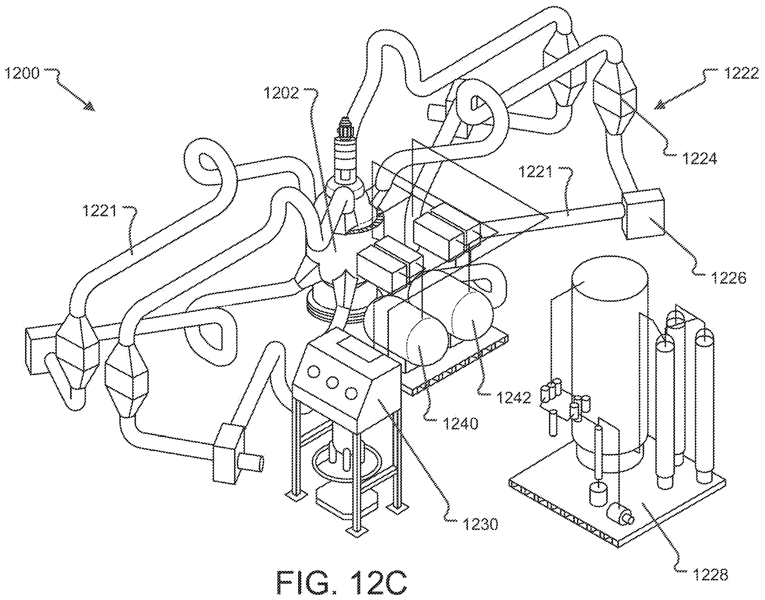

FIGS. 12A-12C illustrate an embodiment of reactor facility 1200 with an alternative primary cooling system and secondary cooling system instead of a heat rejection system. In the embodiment shown, the reactor system 1202 is contained with a shield assembly 1204. The shield assembly 1204 includes a removable top plug 1206 through which the reactor system 1202 may be accessed. In the embodiment shown, the shield assembly 1204 includes a base 1208, a rectangular side wall component 1210, and a top 1212 having the removable plug 1206. In the embodiment shown, coolant ducts 1221 of the cooling circuits 1222, molten salt piping, and other piping and electrical elements penetrate the shield assembly 1204 at various locations.

FIGS. 12A-12C illustrate an alternative layout for a primary cooling system 1220. The primary cooling system 1220 is again illustrated as having four independent cooling circuits 1222. In the embodiment shown, nitrogen is the primary coolant and each cooling circuit 1222 includes a heat exchanger 1224 and a blower 1226. In the embodiment shown, the heat exchangers 1224 transfer heat from the primary coolant to a facility heating system (not shown). Alternatively, the reactor system's heat could be rejected to the environment as described above.

A cover gas management system 1228 is illustrated near the shield assembly 1204. As discussed above, the cover gas management system 1228 maintains the pressure of the cover gas in the headspace above the fuel salt in the vessel head and also cleans the cover gas. The system 1228 may include a pump or blower 1229 for pressure control and any number of vessels for raw gas storage, contaminant removal and contaminant storage. Cover gas management systems are known in the art and any suitable configuration or type may be used.

A reactor system controller 1230 is also illustrated near the shield assembly 1204. The controller 1230 monitors and controls the operation of the reactor system 1202.

A flush salt drain tank 1240 and a fuel salt overflow/drain tank 1242 are shown. The flush salt (e.g., a non-nuclear salt compatible with the fuel salt) may be used to prepare the reactor system for receiving the fuel salt. Flush salt may also be used to flush the reactor system 1202 after removal of the fuel salt. Flush salt may be further be used to dilute the fuel salt to reduce the fuel salt's fissile material density and, thus, its reactivity.

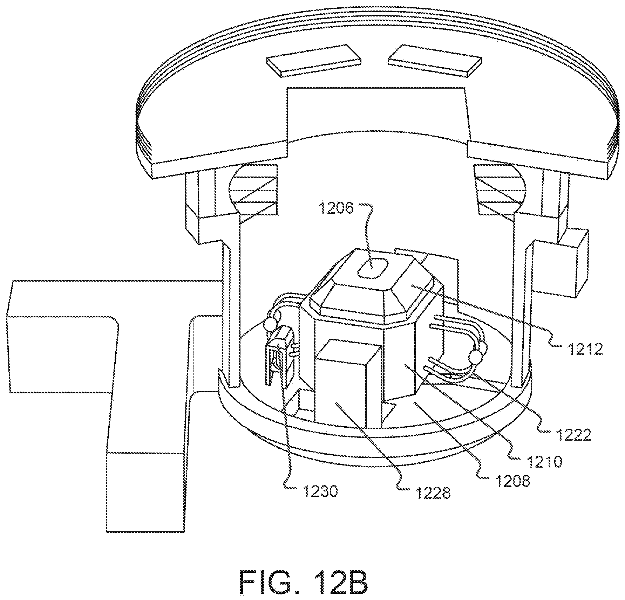

The reactor facility includes a reactor building as shown in FIG. 12B. Again, a removable access panel is provided in the top of the building to access the reactor system 1202, the shield assembly 1204 and the components with the reactor room as illustrated.

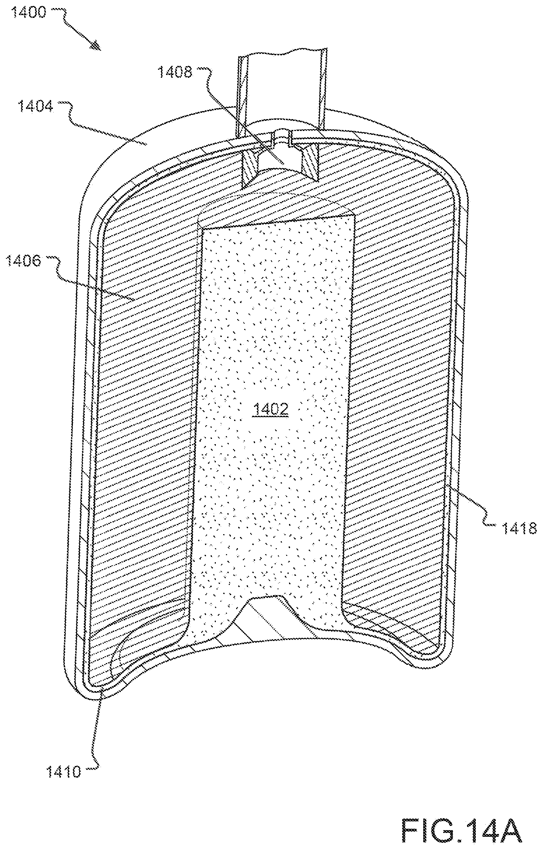

FIGS. 14A-14B illustrate yet another embodiment of a pool-type reactor system 1400. FIG. 14A illustrates the molten fuel volume in a reactor vessel 1404. Similar to the above described systems, a central cylindrical reactor core 1402 is defined by an internal radial reflector 1406 (illustrated in silhouette as the empty space between the fuel salt and the reactor vessel) inside and spaced away from the reactor vessel 1404. A pump chamber 1408 is provided internal to the reactor vessel 1404 that includes an impeller rotated by an external motor and a stator.

However, in the reactor system 1400 in FIGS. 14A-14C there is no upper or lower axial reflectors inside the reactor vessel 1404. Instead, when not in the reactor core 1402 or the pump chamber 1408 the flow of the molten fuel follows the interior surface of the reactor vessel 1404 in one or more channels 1418 defined by the space between the radial reflector 1406 and the reactor vessel 1404. In the embodiment shown, molten fuel flows up through the reactor 1402 into the pump chamber 1408. Rotation of the impeller discharges the molten fuel upwardly and radially against the reactor vessel 1404, forcing the flow along the top of the interior of the reactor vessel 1404. The molten fuel flow then follows the interior surface of the reactor vessel 1404 radially outward, then downward along the heat transfer region of the vertical portion of the reactor vessel 1404. At the bottom of the reactor vessel 1404, the vessel 1404 is shaped to provide a collection channel 1410 near the exterior diameter of the vessel 1404 and further provided with a flow controlling conical shape that delivers the molten fuel into the bottom of the reactor core 1402. Thus, the shape of the bottom interior surface of the reactor vessel 1404 forms the return flow channel for the molten fuel.

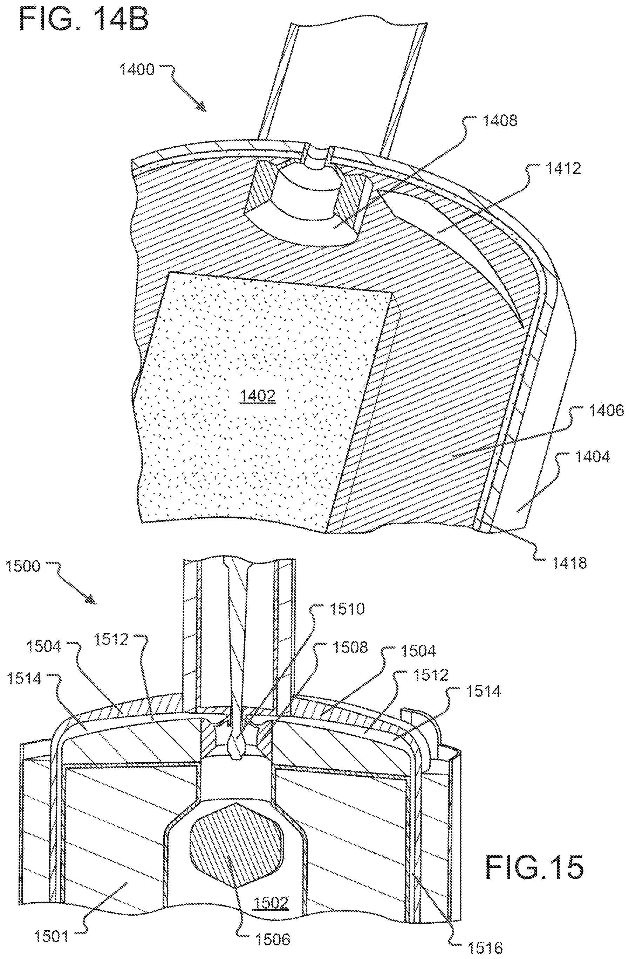

Internal supports and flow control elements may be provided such as shown in FIG. 14B. FIG. 14B illustrates an internal vane 1412 for directing molten fuel flow out of the pump chamber 1408 along the interior surface of the reactor vessel 1404. Other flow conditioning elements such as baffles, orifice plates, or vanes may be provided to direct and control the molten fuel flow as needed. Furthermore, as discussed above, internal supports may be provided at any location to center and fix the radial reflector 1406 within the reactor vessel 1404. Such supports may also be used to control flow of the molten fuel.

Additional external reflectors may be provided external to the reactor vessel to improve the neutronics of the reactor system 1400. For example, an external lower axial reflector may be provided below the reactor vessel 1404. Likewise, an external upper axial reflector may be provided above the reactor vessel 1404.

FIG. 15 illustrates two alternative embodiments of the upper molten fuel exit channel and pump layout that could be used in any reactor system embodiment described herein. FIG. 15 illustrates a section of a reactor system 1500 showing an upper portion of a radial reflector 1501 surrounding a reactor core 1502 within a reactor vessel 1504. Molten fuel flows upward out of the reactor core 1502 and around a protective plug 1506 into a pump chamber 1508. A rotating impeller 1510 in the pump chamber drives the molten fuel upwardly and radially out of the pump chamber 1508 and against the interior surface of the top of the reactor vessel 1504. The molten fuel then flows into a heated molten fuel exit channel 1512 that follows the contours of the internal surface of the top of the reactor vessel 1504. Although illustrated as a single channel allowing flow along the entire interior surface of the top of the reactor vessel 1504, as described above the channel could be divided into separate, independent channels as desired.

In the embodiment shown, an expansion volume 1514 is provided in the heated molten fuel exit channel 1512 of the reactor system 1500. The expansion volume 1514 is a location where the distance between the interior surface of the reactor vessel 1504 and the exterior of the radial reflector 1401 is increased, thereby slowing the flow of molten fuel through that portion of the heated molten fuel exit channel 1512 and, thereby, slowing the flow of molten fuel through the entire fuel circuit. The expansion volume 1514 allows for better mixing of the flow leaving the pump chamber and better diffusion of the molten fuel, resulting in a more uniform flow and temperature in the molten fuel when it enters the heat exchange duct 1516.

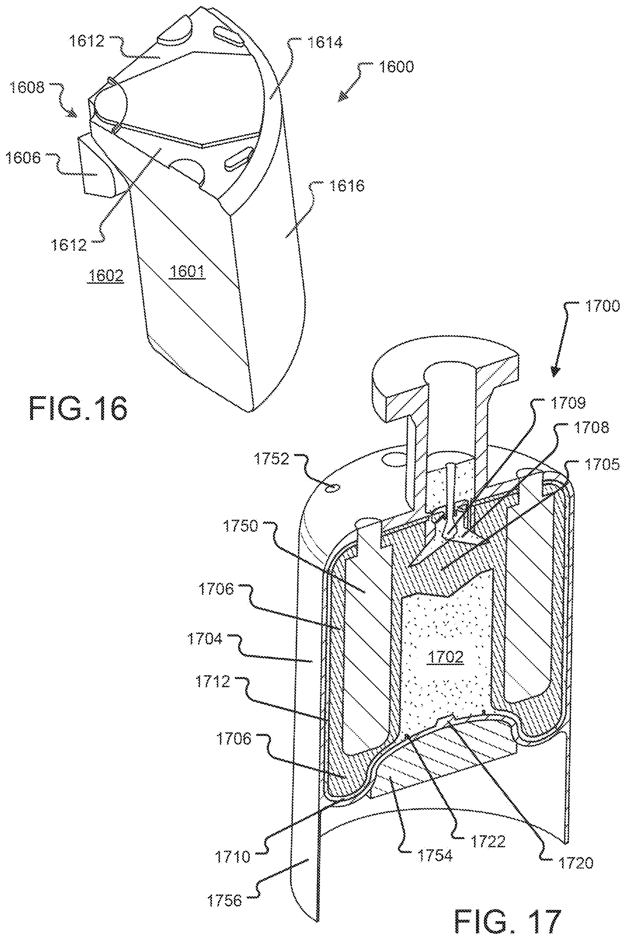

FIG. 16 illustrates yet another embodiment of an upper molten fuel exit channel and the surface elements of the radial reflector that define the channel. FIG. 16 illustrates a section of a reactor system 1600 showing an upper portion of a radial reflector 1601 surrounding a reactor core 1602 within a reactor vessel (not shown). Molten fuel flows upward out of the reactor core 1602 and around a protective plug 1606 into a pump chamber 1608. A rotating impeller (not shown) in the pump chamber drives the molten fuel upwardly and radially out of the pump chamber 1608 and against the interior surface of the top of the reactor vessel. The molten fuel then flows into a heated molten fuel exit channel 1612 that follows the contours of the internal surface of the top of the radial reflector 1601.

The reactor system 1600 is illustrated as having four separate heated molten fuel exit channels 1612 that come together into a single manifold channel 1614 which then distributes the molten fuel into a single heat exchange duct 1616 that extends the circumference of the exterior lateral surface of the radial reflector 1601 and interior surface of the reactor vessel. The manifold channel 1614 allows for better mixing of the flow leaving the pump chamber and better diffusion of the molten fuel, resulting in a more uniform flow and temperature in the molten fuel when it enters the heat exchange duct 1616.

FIG. 17 illustrates an alternative embodiment of a reactor system. The embodiment shown in FIG. 17 is similar to that of FIGS. 14A-14B in that except for molten fuel flow through the reactor core 1702 and pump chamber 1708, the flow paths of the molten fuel are in contact with and are defined by the interior surface of the reactor vessel 1704.

FIG. 17 illustrates the molten fuel volume in a reactor vessel 1704 in which a central cylindrical reactor core 1702 is defined by an internal radial reflector 1706 inside and spaced away from the reactor vessel 1704. A pump chamber 1708, protected from the reactor core 1702 by a reflective plug 1705, is provided internal to the reactor vessel 1704 that includes an impeller 1709 rotated by an external motor. Similar to above designs, control drums 1750 are provided within the reflector 1706 for reactivity control.

However, in the reactor system 1700, while the radial reflector 1706 could be said to include an upper axial component above the top of the reactor core 1702, there is no lower axial reflectors inside the reactor vessel 1704. Rather, an external lower axial reflector 1754 is provided as shown. In the embodiment shown, molten fuel flows up through the reactor core 1702 around the reflective plug 1705 and into the pump chamber 1708. Rotation of the impeller 1709 discharges the molten fuel upwardly and radially against the reactor vessel 1704, forcing the flow along the top of the interior of the reactor vessel 1704. The molten fuel flow then follows the interior surface of the reactor vessel 1704 radially outward, then downward along the heat transfer region of the vertical portion of the reactor vessel 1704 in a heat exchange duct 1712.

FIG. 17 illustrates that the thickness of the walls of the reactor vessel 1704 is thinner in the heat transfer region than in the other parts of the reactor vessel 1704. In FIG. 17, the wall thickness of the top the reactor vessel 1704 is substantially larger than on the sides in the heat transfer region.

At the bottom of the reactor vessel 1704, the vessel 1704 is shaped to provide a collection channel 1710 near the exterior diameter of the vessel 1704. The collection channel 1710 is in fluid communication with an access port 1752 in the top of the reactor vessel 1704 via a dip tube (not shown). The bottom of the reactor vessel 1704 is further provided with a flow controlling conical shape 1720 and a flow controlling orifice plate 1722 that delivers the molten fuel into the bottom of the reactor core 1702. Thus, the shape of the bottom interior surface of the reactor vessel 1704 forms the return flow channel for the molten fuel. The reactor vessel 1704 is further provided with an integrated skirt to support the reactor system 1700 on the floor of a reactor facility.

### Extra-terrestrial Reactor Designs

It is desirable to have power systems that can work in ultra-cold or extra-terrestrial environments, for example to provide power to a satellite, space ship, or extra-terrestrial facility such as a manned or unmanned lunar or Mars base.

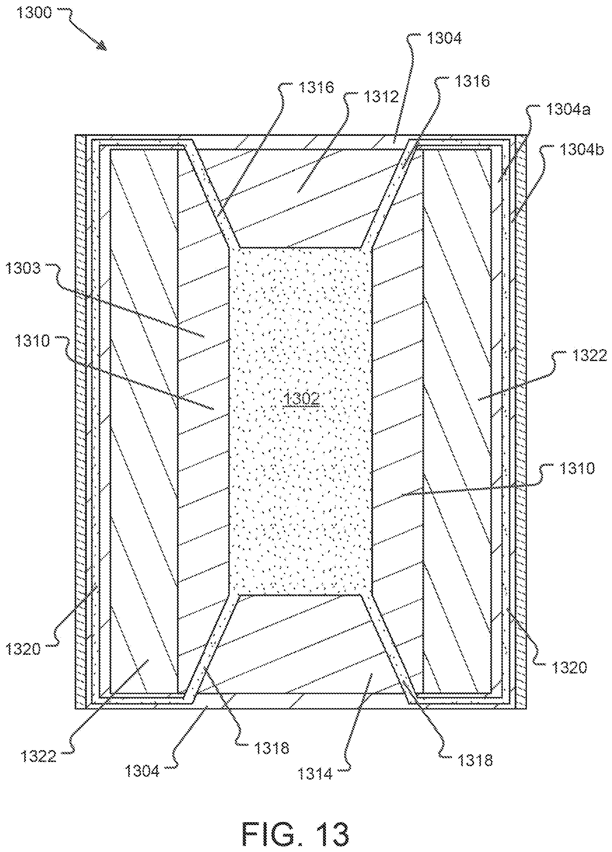

FIG. 13 illustrates a functional block diagram of pool-type reactor system 1300 designed for use with a molten nuclear fuel in an extra-terrestrial environment or another suitably cold environment. The reactor system 1300 is generally the same design as those described above except that, instead of using a coolant to remove heat from the exterior surface of the reactor vessel, the heat is dissipated to the external environment through a solid-state, heat-to-electricity conversion system attached to the exterior of the reactor vessel. This converts the heat directly to electricity that can then be used operate equipment.

In the embodiment shown, the reactor system 1300 includes a reactor core 1302 defined by a reflector assembly 1303 contained with a reactor vessel 1304. In the simple cross section diagram shown, the reflector assembly 1303 includes a radial reflector 1310, an upper axial reflector 1312, and a lower axial reflector 1314. One or more heated fuel salt exit channels 1316 at the top of the reactor core 1302 are defined between the radial reflector 1310 and the upper axial reflector 1312. One or more cooled fuel salt return channels 1318 are defined between the radial reflector 1310 and the lower axial reflector 1314. One or more heated fuel salt ducts 1320 connect the heated fuel salt exit channels 1316 with the cooled fuel salt return channels 1318 to complete the fuel salt circuit within the reactor system.

The fuel salt circuit passes heated fuel salt along the interior surface of the reactor vessel 1304 where heat is transferred through the vessel wall to a solid-state thermoelectric generator (TEG) such as a thermionic or thermoelectric system. TEGs are known in the art and any suitable design or type may be used. TEGs produce a current flow in an external circuit by the imposition of a temperature difference (ΔT). The magnitude of the ΔT determines the magnitude of the voltage difference (ΔV) and the direction of heat flow determines the voltage polarity. International Patent Application WO 2014/114950 provides a further description of the operation of TEGs.

In an embodiment the TEG consists of a collection of individual thermoelectric (TE) modules arranged in a fault-tolerant configuration wrapped around the exterior surface of the outer reactor vessel. The exterior surface of the TE modules is exposed to the ambient environment (e.g., the Martian or lunar atmosphere or directly to space when in an orbital or deep space deployment) and is able to passively reject waste heat by radiating it to the surroundings. In an embodiment, the fuel salt in the reactor core maintains a temperature of 500-600°C. Given that the surface of Mars is approximately -65°C and that of deep space is -270°C, the ΔT available to the TEG in an extra-terrestrial environment could be 550-800°C or more.

In an embodiment, the reactor system relies on natural circulation to drive the flow of fuel salt around the circuit. Natural circulation, even in lunar gravity, is calculated to drive a flow velocity of several centimeters per second through the core. Alternatively, one or more electric pumps may be provided somewhere in the fuel salt circuit to drive the flow of fuel salt for zero-gravity embodiments. The pump or pumps would be powered by the TEG.

In an embodiment, the fuel is a molten salt fuel mixture that includes a combination of NaCl, PuCl₃ and/or UCl₃, such as the eutectic 64NaCl-36PuCl₃, which melts at approximately 450°C. Options that avoid use of Pu are possible, but they invariably lead to larger and more massive cores, which increases the cost of extra-terrestrial deployment. KCl and MgCl₂ are alternate carrier salts that may also be suitable for use in the reactor system 1300.

Beryllium and beryllium oxide may be used as reflector material in the extra-terrestrial deployments although others are possible as described above.

Beyond the reflector, unlike the designs above, the reactor system 1300 includes an in-vessel radiation shield 1322 that reduces the radiation doses to external equipment, particularly the TEG, and personnel. An enriched-B₄C structure is a viable option that has an acceptable weight and reduces the external radiation dose by several orders of magnitude. In the embodiment shown, the in-vessel shield 1322 is located on the exterior of the radial reflector 1310 between the radial reflector 1310 and the heated fuel salt duct 1320. Additional in-vessel shields or out-of-vessel shields may be provided, for example, above the upper axial reflector 1312 or below the lower axial reflector 1314.

In the embodiment shown, on portions of the upper walls and the lateral walls of the reactor vessel 1304 an inner vessel 1304a and an outer vessel 1304b are provided between which the fuel salt flows in the heated fuel salt ducts 1320. The inner vessel 1304a separates the shield 1322 from contact with the fuel salt which protects the shield 1322 from corrosion. In an alternative embodiment similar to those described above, the inner vessel 1304a is omitted. For example, the material for the shield 1322 and the reflector material of the radial reflector 1310 may be contained in a single structure the outside surface of which is in contact with the molten fuel and defines the heat exchange ducts 1320.

To prevent loss of heat to the ambient environment around the reactor system 1300, surfaces of the reactor vessel that are not in contact with the TEG may be insulated by an external insulator. In an embodiment, greater than 90% of the heat generated by the reactor core while in steady state operation is dissipated through the TEG and, thus, used to create electricity. In another embodiment, greater than 99% of the heat generated is dissipated through the TEG. In an alternative embodiment, all or substantially all (e.g., greater than 90%) of the entire exterior surface of the reactor system 1300 could be covered by the TEG.

In design calculations, a natural circulation (even in 1/6 of Earth's gravity) system operating at 50-100 kWₜₕ could be coupled to thermoelectrics to provide 10-15 kWₑ of 120 VDC power. Fueling with PuCl₃ is preferred for a minimum mass system, but UCl₃ (or ternary mixtures of NaCl, PuCl₃ and UCl₃) is also an option.

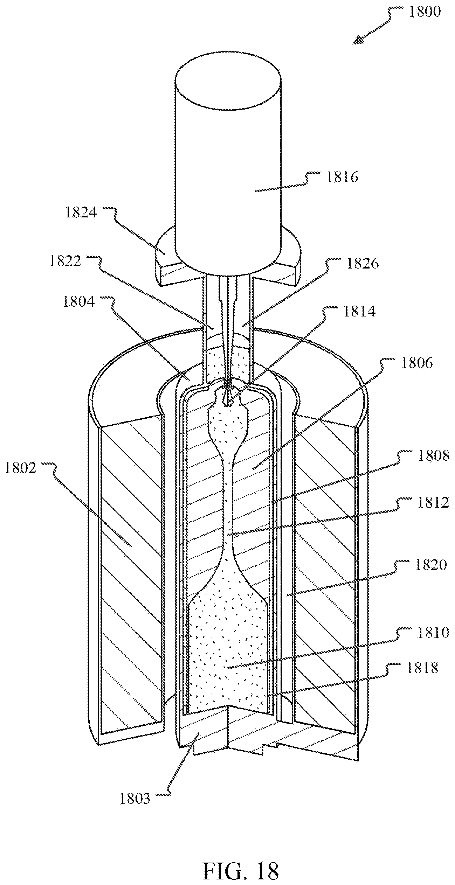

FIG. 18 illustrates an alternative embodiment of a reactor 1800 in which most of the reflector material is outside of the reactor vessel 1804. In the embodiment shown, the reactor vessel 1804 is a cylinder that contains all of the salt and a displacement component 1806, which may be a reflector, in the upper section of the reactor vessel 1804. In the embodiment shown, other than the displacement component 1806, the reflector elements including a radial reflector 1802 and a bottom reflector 1803 are located outside the vessel 1804. As with the designs above, the salt flows around the outside surface of the displacement component 1806 through a downcomer heat exchange duct 1808 defined by the exterior of the displacement component 1806 and the interior surface of the reactor vessel 1804. This design reduces the overall size of the reactor vessel 1804 for a given volume of salt relative to designs with internal radial or bottom reflectors described above.

An unmoderated pool of fuel salt at the bottom of the reactor vessel acts as the reactor core 1810. The displacement component 1806 includes a draft tube section 1818 that extends almost to the bottom of the reactor vessel 1804, thus forcing the fuel salt to flow along most of the interior surface of the reactor vessel 1804 before it is redirected into the reactor core 1810. Fuel salt heated by the fission which occurs in the reactor core 1810 rises in the center of the reactor vessel 1804 through an upcomer duct 1812 that is provided in the center of the displacement component 1806 as shown. In the embodiment shown, an impeller 1814 is located at the top of the upcomer duct 1812 to assist in driving the flow of the fuel salt. As described above, the impeller 1814 is driven by a motor 1816 external to the reactor vessel 1804. A casing containing the impeller 1814 is formed by the displacement component 1806 and the reactor vessel 1804. In an alternative embodiment, the reactor 1800 is designed to operate with natural circulation and the pump is omitted.

Cooling of the reactor 1800 is again performed by flowing coolant gas or fluid along the outside surface of the reactor vessel 1804. In the embodiment shown a coolant duct 1820 is formed in an annulus region between the outside surface of the reactor vessel 1804 and the inside surface of the radial reflector 1802. In the embodiment shown, no fins are provided in the coolant duct 1820, i.e., the coolant duct 1820 is an open channel through which the coolant flows. In this embodiment, by eliminating the fins the reactivity of the reactor is increased as the fins have been determined to interfere with the reflection of neutrons back into the reactor core.

In an embodiment, the coolant is flowed co-currently with the fuel salt, i.e., both the coolant and the fuel salt flow downwardly on the opposing surfaces of the lateral walls of the reactor vessel 1804. Co-current flow, with or without the use of fins, is equally applicable to all embodiments of reactors described herein.

In this embodiment the reactor vessel 1804 is made of a material sufficiently strong and with sufficient characteristics to withstand the high neutron flux that will be incident near the region of the reactor core 1810. By locating the reflector outside of the reactor vessel, the diameter of the reactor vessel can be decreased. Assuming the same thickness of the downcomer duct 1808 there will be less cross-sectional flow area so for the same mass flow rate the velocity of the fuel salt traveling through the duct 1808 will be higher for this design. It is anticipated that the increased velocity will result in higher heat transfer coefficients. A smaller diameter vessel also requires less structural strength and, thus, potentially a lower wall thickness. The thinner reactor vessel walls will also improve the heat transfer characteristics between the downcomer heat exchange duct 1808 and the coolant duct 1820.

Other aspects of this design include a sufficiently tall riser 1822 between the top of the reactor vessel 1804 and the pump connection flange 1824. This riser 1822 defines an expansion volume for the fuel salt 1826. Heat exchange characteristics through the wall of the reactor vessel can be modified by increasing or decreasing the height lateral side of the reactor vessel, thus increasing the heat transfer area.

Although the reactor illustrated in FIG. 18 is not shown with some of the elements described above, any and all of the reactor components from the above embodiments may be included. For example, a shield plug may be provided in the upcomer duct 1812 to protect the impeller from neutrons generated in the reactor core 1810. A conically-shaped lower axial reflector may be provided in the bottom of the vessel 1804 which may be incorporated into the displacement component 1806 or may be a separate component. A removable vessel head may be provided as described above at the top of the reactor vessel 1804 or the vessel may be a continuous body that includes the riser 1822 as shown.

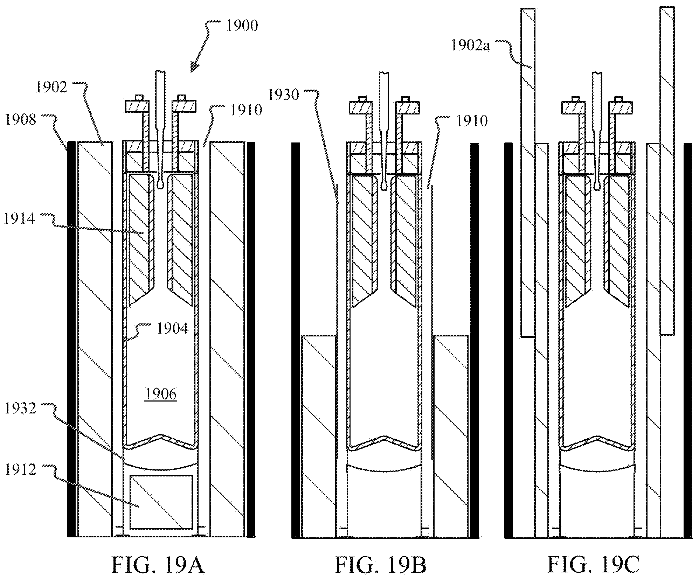

FIGS. 19A-E illustrate several different options available for reactivity control when the radial reflector 1902 is positioned external to the reactor vessel 1904 with the design as shown in FIG. 18. By moving all or some of the radial reflector 1902, the reactivity of the reactor 1900 may be controlled. FIGS. 19A-C show a cross-sectional view of a reactor in which each FIG. illustrates a different possible radial reflector configuration. In an embodiment, a radial absorber 1908 or neutron shield external to the reflector 1902 may also be provided as shown to contain the neutrons that are not intercepted by the reflector 1902.

In FIG. 19A the external radial reflector 1902 is shown in the highest reactivity position in which the reflector completely surrounds the reactor vessel 1904. In this configuration neutrons generated in the reactor core 1906 that are traveling laterally are reflected back into the reactor core by the radial reflector 1902.

FIG. 19B illustrates a reduced reactivity configuration in which the radial reflector 1902 has been lowered (or alternatively an upper portion of the reflector has been removed) so that the reflector does not surround the reactor core 1906 completely as shown in FIG. 19A. In this configuration some of the neutrons generated in the reactor core 1906 escape and are not reflected back into the reactor core thereby reducing the reactivity of the reactor. In this embodiment, in order to ensure coolant flow along the exterior surface of the reactor vessel 1904, a cooling jacket 1930 may be provided so that movement of the reflector 1902 does not affect the coolant duct 1910.

FIG. 19C illustrates yet another embodiment in which a portion of the radial reflector 1902 is movable for reactivity control but the size and length of the coolant duct 1910 is maintained. In FIG. 19C a portion 1902a of the reflector has been raised reducing the overall thickness of reflector material around the reactor core 1906, thereby reducing the reactivity of the reactor 1900.

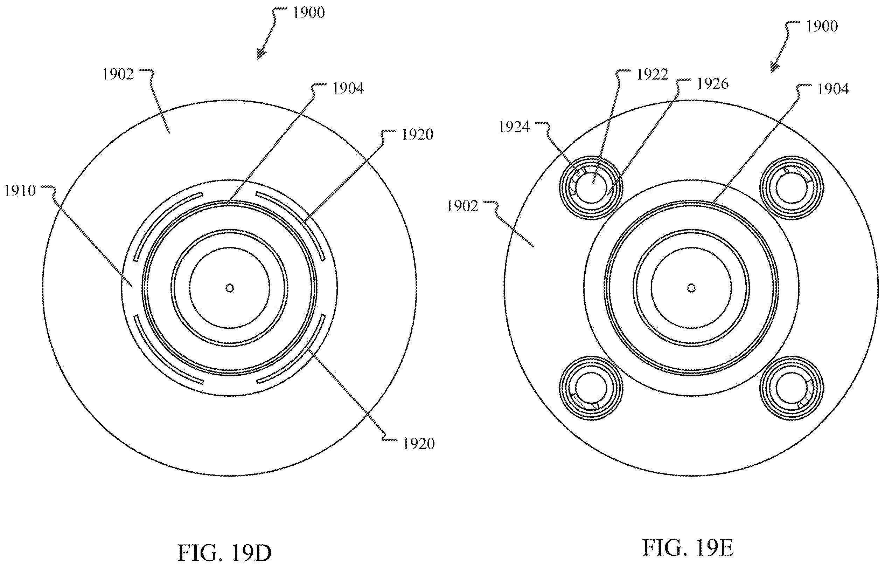

FIG. 19D is a plan view of the reactor 1900 illustrating yet another alternative to reactivity control using this design. In the embodiment shown, control elements 1920, which may be neutron reflectors or neutron absorbers, may be inserted into the coolant duct 1910 formed between the reflector 1902 and the outside surface of the reactor vessel 1904. Similar to control rods, these control elements 1920 are illustrated as four separate arcuate plates which may be raised or lowered within the coolant duct 1910. If the elements 1920 are made of absorbing material then insertion of the elements 1920 causes the reactivity of the reactor 1900 to be reduced. If the elements are reflectors or material made of reflective material then insertion of the elements 1920 into the coolant duct 1910 may increase the reactivity of the reactor 1900 and removal may decrease the reactivity of the reactor. Although illustrated as four arcuate plates, any number or shape of elements 1920 may be used including, for example, cylindrical rods, or planar plates sized to fit within the coolant duct.

FIG. 19E illustrates yet another embodiment of reactor control. FIG. 19E is a plan view of the reactor 1900 showing the use of control drums 1922 in the reflector. Similar to the control drums described above, the control drums 1922 may rotate within a control drum recess provided in the reflector 1902 in order to expose an absorbing face 1924 or reflecting face 1926 on the control drum to the reactor core.

The different forms of reactor control in FIGS. 19A-E could be used separately or together in any combination. For example, the arcuate control elements of FIG. 19D could be used in conjunction with a separable reflector 1902 that could change from the configuration shown in FIG. 19A to that shown in FIG. 19B or 19C. As another example, the reflector of FIG. 19A could include one or more control drums as shown in FIG. 19E and also be lowerable into the position shown in FIG. 19B. Any and all combinations are possible.

FIGS. 19A-19C illustrate a further aspect of this design related to the reactor vessel 1904. In an embodiment, the reactor vessel 1904 is designed to be free to change size and shape in response to thermal expansion. In the embodiment shown, the reactor vessel 1904 is supported from below by a support structure 1932 or stand. In the embodiment shown in FIG. 19A the support structure 1932 includes a lower axial reflector 1912. The lateral wall the reactor vessel 1904 is not constrained in movement, but rather is allowed to change in diameter by providing ducts on either side of the wall of the reactor vessel.

In the embodiment shown, the base of the reactor vessel 1904 is provided with generally convex, conical, or frustoconical shape to assist with directing the flow of the salt from the downcomer duct into the center of the reactor core 1906. The shape has several other benefits including providing more strength than a flat surface and accommodating thermal expansion better than a flat bottom. In an alternative embodiment (not shown) a second displacement component may be provided in the bottom of the vessel as a lower axial reflector and also provide the convex shape for directing the flow of fuel salt.

As discussed above, to allow for free thermal expansion of the reactor vessel 1904 the vessel 1904 may simply be cradled by the support structure 1932 as opposed to rigidly attached. In an alternative embodiment, the vessel 1904 may be suspended from above via the pump flange. The displacement component 1914 may be suspended from the top of the vessel 1904, from the vessel head if one is provided, or from the pump assembly. In an alternative embodiment, the displacement component 1914 may be loosely contained within the vessel 1904 and resting on the bottom vessel 1904 via a downcomer wall, one or more struts, or other elements provided to maintain the displacement component 1914 in the proper position in the vessel 1904 without the displacement component 1914 being rigidly attached to the vessel.

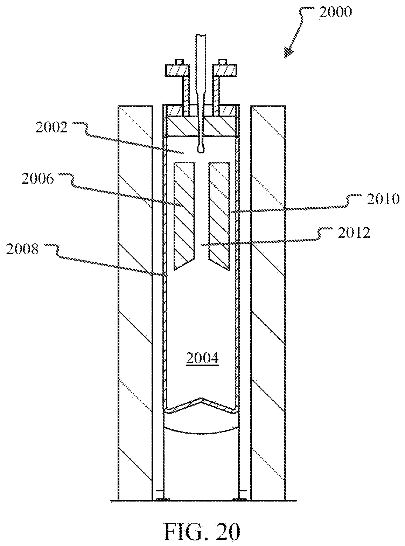

FIG. 20 illustrates an embodiment of a low power reactor design adapted to reduce the reactivity change associated with flowing delayed neutron precursors. A delayed neutron is a neutron emitted by an excited fission product nucleus during beta disintegration after the fission that created the product nucleus. Typically, neutrons generated later than 10⁻¹⁴ seconds after the fission are considered delayed neutrons. Delayed neutrons are normally not an important design criteria in a molten salt reactor designed to generate power. In power generating designs, at any given time there typically is a significant amount of fuel salt outside of the reactor core traveling through the fuel salt cooling circuit through the heat exchangers. In these designs, delayed neutrons have little effect on the reactivity of the reactor because most of the delayed neutrons have been emitted before the fuel salt has completed a circuit through the heat exchangers and returned to the reactor core. In fact, even though it is normally a design criterion to minimize the amount of fuel salt outside of the reactor core (because of the high cost of fuel salt), power-generating molten salt reactors that circulate fuel salt through shell-and-tube heat exchangers require so much salt to be outside the reactor core for heat transfer purposes that the effect of delayed neutrons on reactivity is ignored.

In the test reactor designs proposed herein, however, delayed neutrons could significantly affect the reactivity of the reactor. While normally, because of the high cost of fuel salt, a reactor design criterion is to minimize the amount of fuel salt outside of the reactor core, it has been determined that in these low-power test reactor designs the fuel salt volume outside of the reactor core may need to be increased beyond that amount which may be required for heat transfer purposes. Essentially, a reservoir of fuel salt outside of the reactor core but within the fuel salt flow circuit that serves no heat transfer purpose is provided solely for the purpose of increasing the volume of fuel salt in the fuel salt circuit outside of the reactor core. One way of looking at this reservoir is that it artificially increases the residence time of the fuel salt in the fuel salt circuit outside of the reactor core with no attendant heat transfer benefit.

FIG. 20 illustrates an embodiment of providing a delayed neutron reservoir 2002 in the fuel salt circuit outside of the reactor core 2004. The reactor 2000 is similar to that shown in FIG. 19 having a reactor vessel 2008 enclosing a displacement component 2006 and a free volume filled with fuel salt including a reactor core 2004. A delayed neutron reservoir 2002 of fuel salt is created outside of the reactor core 2004 by changing the size of the displacement component 2006 to manage the reactivity associated with delayed neutrons.

In the embodiment shown, the reservoir 2002 above the displacement component 2006. However, the reservoir 2002 could be located anywhere in the fuel salt flow path that is outside of the reactor core 2004. By increasing the volume of fuel salt outside of the reactor core 2004 the majority of the delayed neutrons can be prevented from affecting the reactivity of the fission in the reactor core 2004.

In an embodiment, the delayed neutron reservoir 2002 is sized based on the total volume of salt in the reactor vessel 2008, Vₜₒₜ, relative to the volume of salt in the reactor core, V_{core}. In this embodiment, the volume of the reservoir 2002 is increased until the desired ratio of V_{core}/Vₜₒₜ is achieved. It has been determined that a target ratio of V_{core}/Vₜₒₜ of from 75-99% (i.e., V_{core}/Vₜₒₜ is from 0.75-0.99) is beneficial and that ratios of V_{core}/Vₜₒₜ from 95-85% and from 92-88% and from 91-89% are contemplated. Considering that the total volume of salt in the reactor vessel 2008, Vₜₒₜ, is made up of the volume of the reactor core, V_{core}, the volume of the reservoir, Vᵣₑₛ, and the volume of salt in the fuel salt circuit but outside of the reactor core and the reservoir, V_{cir} (note V_{cir} includes the volume of salt in the heat transfer downcomer duct 2010 and the upcomer duct 2012 but, depending on the design, does not include the expansion volume in a riser as the expansion volume is not normally part of the flow circuit and does not change the residence time of the fuel salt outside of the reactor core 2004). In an alternative embodiment, the delayed neutron reservoir 2002 is sized so that the ratio of V_{core}/Vₜₒₜ is less than 95%, less than 91%, less than 90%, about 90%, less than 89%, less than 85% or even less than 75%. In an embodiment, a minimum ratio of V_{core}/Vₜₒₜ is 50%.

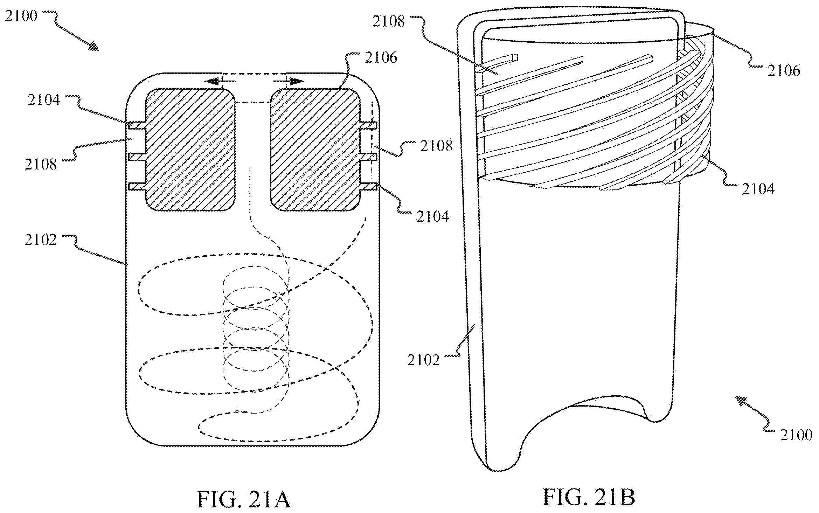

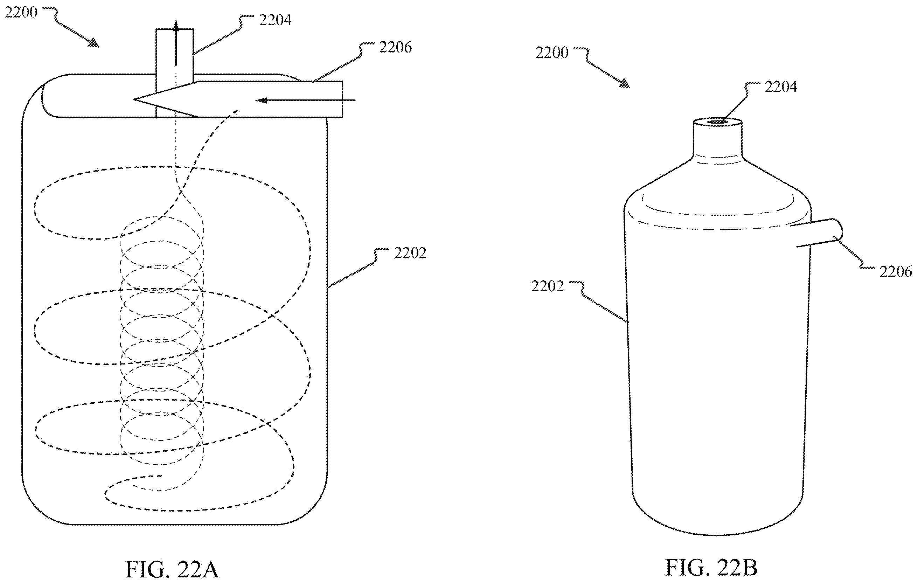

FIGS. 21 and 22 illustrate alternative designs for manipulating the flow of fuel salt as it circulates through the interior of the reactor vessel. Fuel salt flow was generally described above as having vertical flow up through the upcomer duct and vertical flow down in the downcomer duct. This is the simplest flow regime and represents the shortest residence time of fuel salt in the downcomer heat exchange ducts and near the surface interior surface of the reactor vessel. However, other flow regimes are possible that alter the heat transfer aspects of the reactor.

FIGS. 21A and 21B illustrate two views of an embodiment of a reactor 2100 in which transverse swirling flow (illustrated by the dashed line) is induced in the fuel salt flowing along the interior surface of the lateral sides of the reactor vessel 2102. In the embodiment shown, vanes 2104 are provided on the surface of the displacement component 2106 in the downcomer duct 2108 to direct the flow of fuel salt tangentially downward along the interior surface of the reactor vessel instead of straight downward. FIG. 21A is an illustration of a cross-section of the reactor 2100 while FIG. 21B is a cutaway view showing the vanes 2104 on the displacement component 2106.

In the embodiment shown, a series of vanes 2104 are provided similar to the threads on a screw within the downcomer duct 2108 between the displacement component 2106 and the interior surface of the reactor vessel 2102. The vanes 2104 could be attached to the displacement component 2106, the interior surface of the reactor vessel 2102, or a combination of both. The vanes 2104 could extend the entire width of the downcomer duct 2108, thus connecting the reactor vessel 2104 with the displacement component 2106 or the vanes 2104 could only partially extend into the downcomer duct 2108. In effect, the swirling flow increases the travel time of salt around the interior surface of the reactor vessel 2102 before the salt reaches the bottom of the vessel and then flows upwardly through the reactor core. Modeling indicates the swirling motion continues within the core as the fuel salt is heated which also improves the uniformity of heating of the fuel salt leaving the reactor core.

FIGS. 22A and 22B illustrate an alternative embodiment of a reactor design with a swirling fuel salt flow around the interior surface of the reactor vessel. In this embodiment, fuel salt is removed from the reactor vessel 2202 from a central outlet port 2204 and re-injected through an injection port 2206 that is tangential to the side of the reactor vessel 2202. FIG. 22A is an illustration of a cross-section of the reactor 2200 showing the induced salt flow in dashed line while FIG. 22B is a perspective view showing the outlet port 2204 and injection port 2206. By directing the flow of fuel salt tangentially along the interior surface of the reactor vessel swirling fuel salt flow may also be induced.

In an alternative embodiment two or more injection ports 2206 may be used. The injection port 2206 may be angled slightly downward or may be horizontal as shown.

FIGS. 21A, 21B, 22A, and 22B illustrate only two examples of how swirling flow of fuel salt along the interior surface of the reactor vessel may be achieved. Other methods of creating the swirling motion in the salt flow are possible such as providing vanes along the interior surface of the reactor vessel or providing one or more directed nozzles or jets within the outlets of the pump and any suitable method may be utilized herein.

Notwithstanding that the numerical ranges and parameters setting forth the broad scope of the technology are approximations, the numerical values set forth in the specific examples are reported as precisely as possible. Any numerical values, however, inherently contain certain errors necessarily resulting from the standard deviation found in their respective testing measurements.

It will be clear that the systems and methods described herein are well adapted to attain the ends and advantages mentioned as well as those inherent therein. Those skilled in the art will recognize that the methods and systems within this specification may be implemented in many manners and as such are not to be limited by the foregoing exemplified embodiments and examples. For example, while the above reactor systems are shown as being general cylindrical in design with the reactor cores, radial reflectors, and reactor vessels being circular or annular in cross section, the cross section may be any shape including a circle, a square, a hexagon, a pentagon, an octagon, or any polygon. In addition, the shape or diameter of the cross section could change in difference locations of the reactor system. For example, a reactor core may be frustoconical in shape such as those described in U.S. Published Patent Application No. 2017/0216840. In this regard, any number of the features of the different embodiments described herein may be combined into one single embodiment and alternate embodiments having fewer than or more than all of the features herein described are possible.

While various embodiments have been described for purposes of this disclosure, various changes and modifications may be made which are well within the scope contemplated by the present disclosure. Numerous such changes may be made which will readily suggest themselves to those skilled in the art and which are encompassed within the scope of the invention as claimed.

## Claims

1. A molten fuel nuclear reactor (1800) comprising:
a reactor vessel (1804) having an interior surface and an exterior surface;
a displacement component (1806) configured to displace molten nuclear fuel within the reactor vessel, the interior surface of the reactor vessel and the displacement component together defining a reactor core (1810) that, when containing a molten nuclear fuel, can achieve criticality, a central upcomer duct (1812), and a downcomer duct (1808) in fluid communication with the reactor core and the central upcomer duct; and
a radial reflector (1802) around the reactor vessel; and
a coolant duct (1820) between the reactor vessel and the radial reflector;
the interior surface of the reactor vessel in thermal communication with the downcomer duct and the exterior surface of the reactor vessel in thermal communication with the coolant duct whereby heat from molten nuclear fuel in the downcomer duct is transferred through the reactor vessel from the interior surface of the reactor vessel to the exterior surface and thereby to a coolant in the coolant duct.

2. The nuclear reactor of claim 1 further comprising:
a lower axial reflector below the reactor vessel.

3. The nuclear reactor of claim 1 wherein the displacement component incorporates neutron reflecting material to reflect neutrons from the reactor core back into the reactor core.

4. The nuclear reactor of any of claims 1-3, wherein the downcomer duct is fluidly connected to the reactor core to receive heated molten fuel from a first location in the reactor core and discharge cooled molten fuel to a second location in the reactor core different from the first location.

5. The nuclear reactor of any of claims 1-4, wherein the displacement component includes a central penetration therethrough which defines the central upcomer duct and a draft tube.

6. The nuclear reactor of any of claims 1-5 further comprising:
at least one vane attached to the displacement component that directs molten nuclear fuel diagonally along the interior surface of the reactor vessel.

7. The nuclear reactor of any of claims 1-6 further comprising:
a vessel head assembly sealing a top of the reactor vessel.

8. The nuclear reactor of any of claims 1-7, wherein the radial reflector further comprises:
a drum well for receiving a control drum; and
a control drum including a body of neutron reflecting material at least partially faced with a neutron absorbing material, the control drum rotatably located within the drum, wherein rotation of the control drum within the drum well changes a reactivity of the nuclear reactor.

9. The nuclear reactor of claim 7 further comprising:
an access port in the vessel head assembly in fluid communication with the reactor core.

10. The nuclear reactor of any of claims 1-9, wherein the radial reflector is moveable relative to the reactor vessel whereby reactivity of the nuclear reactor can be changed by moving the radial reflector.

11. The nuclear reactor of claim 10, wherein the radial reflector is a plurality of reflector elements and moving the radial reflector includes moving a first one of the plurality of reflector elements.

12. The nuclear reactor of any of claims 1-11 further comprising:
an impeller that draws molten nuclear fuel into the impeller from the reactor core and drives the molten nuclear fuel into the downcomer duct.

13. The nuclear reactor of any of claims 1-12, wherein the downcomer duct is fluidly connected to the reactor core to receive heated molten fuel from a first location in the central upcomer duct and discharge cooled molten fuel to a second location in the reactor core.

14. The nuclear reactor of any of claims 1-13 further comprising:
a control element within the coolant duct that can be moved to control reactivity of the nuclear reactor.

15. The nuclear reactor of any of claims 1-14, wherein the cooling system further comprises:
a primary cooling circuit including the coolant duct, a heat exchanger, and a coolant blower, the coolant blower configured to circulate the coolant through the primary cooling circuit whereby heat from heated coolant from the coolant duct is transferred via the heat exchanger to air; and
a heat rejection system including an air blower that directs air through the heat exchanger to a vent to an ambient atmosphere.

## Patentansprüche

1. Schmelzbrennstoff-Kernreaktor (1800), umfassend:
einen Reaktorbehälter (1804) mit einer Innenfläche und einer Außenfläche;
eine Verdrängungskomponente (1806), die dazu ausgelegt ist, geschmolzenen Kernbrennstoff innerhalb des Reaktorbehälters zu verdrängen, wobei die Innenfläche des Reaktorbehälters und die Verdrängungskomponente zusammen einen Reaktorkern (1810) definieren, der, wenn er einen geschmolzenen Kernbrennstoff enthält, Kritikalität erreichen kann, einen zentralen Aufwärtskanal (1812) und einen Abwärtskanal (1808) in Fluidkommunikation mit dem Reaktorkern und dem zentralen Aufwärtskanal; und
einen Radialreflektor (1802) um den Reaktorbehälter; und
einen Kühlmittelkanal (1820) zwischen dem Reaktorbehälter und dem Radialreflektor;
wobei die Innenfläche des Reaktorbehälters in thermischer Kommunikation mit dem Abwärtskanal ist, und die Außenfläche des Reaktorbehälters in thermischer Kommunikation mit dem Kühlmittelkanal ist, wodurch Wärme aus geschmolzenem Kernbrennstoff in dem Abwärtskanal durch den Reaktorbehälter hindurch von der Innenfläche des Reaktorbehälters auf die Außenfläche und damit auf ein Kühlmittel in dem Kühlmittelkanal übertragen wird.

2. Kernreaktor nach Anspruch 1, ferner umfassend:
einen unteren Axialreflektor unterhalb des Reaktorbehälters.

3. Kernreaktor nach Anspruch 1, wobei die Verdrängungskomponente neutronenreflektierendes Material eingebaut hat, um Neutronen aus dem Reaktorkern zurück in den Reaktorkern zu reflektieren.

4. Kernreaktor nach einem der Ansprüche 1-3, wobei der Abwärtskanal fluidisch mit dem Reaktorkern verbunden ist, um erwärmten geschmolzenen Brennstoff von einer ersten Stelle in dem Reaktorkern zu empfangen und gekühlten geschmolzenen Brennstoff zu einer zweiten Stelle in dem Reaktorkern auszutragen, die sich von der ersten Stelle unterscheidet.

5. Kernreaktor nach einem der Ansprüche 1-4, wobei die Verdrängungskomponente eine zentrale Durchdringung durch sie hindurch einschließt, welche den zentralen Aufwärtskanal und ein Saugrohr definiert.

6. Kernreaktor nach einem der Ansprüche 1-5, ferner umfassend:
mindestens eine an der Verdrängungskomponente befestigte Schaufel, die geschmolzenen Kernbrennstoff diagonal entlang der Innenfläche des Reaktorbehälters leitet.

7. Kernreaktor nach einem der Ansprüche 1-6, ferner umfassend:
eine Behälterkopfanordnung, die ein Oberteil des Reaktorbehälters versiegelt.

8. Kernreaktor nach einem der Ansprüche 1-7, wobei der Radialreflektor ferner umfasst:
eine Trommelmulde zum Aufnehmen einer Steuertrommel; und
eine Steuertrommel, die einen Körper aus neutronenreflektierendem Material einschließt, der zumindest teilweise mit einem neutronenabsorbierenden Material versehen ist, wobei die Steuertrommel sich drehbar innerhalb der Trommel befindet, wobei Drehung der Steuertrommel innerhalb der Trommelmulde eine Reaktivität des Kernreaktors verändert.

9. Kernreaktor nach Anspruch 7, ferner umfassend:
eine Zugangsöffnung in der Behälterkopfanordnung in Fluidkommunikation mit dem Reaktorkern.

10. Kernreaktor nach einem der Ansprüche 1 bis 9, wobei der Radialreflektor relativ zu dem Reaktorbehälter beweglich ist, wodurch die Reaktivität des Kernreaktors durch Bewegen des Radialreflektors verändert werden kann.

11. Kernreaktor nach Anspruch 10, wobei der Radialreflektor eine Vielzahl von Reflektorelementen ist, und Bewegen des Radialreflektors Bewegen eines ersten der Vielzahl von Reflektorelementen einschließt.

12. Kernreaktor nach einem der Ansprüche 1-11, ferner umfassend:
ein Laufrad, das geschmolzenen Kernbrennstoff aus dem Reaktorkern in das Laufrad zieht und den geschmolzenen Kernbrennstoff in den Abwärtskanal treibt.

13. Kernreaktor nach einem der Ansprüche 1-12, wobei der Abwärtskanal fluidisch mit dem Reaktorkern verbunden ist, um erwärmten geschmolzenen Brennstoff von einer ersten Stelle in dem zentralen Aufwärtskanal zu empfangen und gekühlten geschmolzenen Brennstoff an einer zweiten Stelle in dem Reaktorkern auszutragen.

14. Kernreaktor nach einem der Ansprüche 1-13, ferner umfassend:
ein Steuerelement innerhalb des Kühlmittelkanals, das zur Steuerung der Reaktivität des Kernreaktors bewegt werden kann.

15. Kernreaktor nach einem der Ansprüche 1-14, wobei das Kühlsystem ferner umfasst:
einen Primärkühlkreis, der den Kühlmittelkanal, einen Wärmetauscher und ein Kühlmittelgebläse einschließt, wobei das Kühlmittelgebläse dazu ausgelegt ist, das Kühlmittel durch den Primärkühlkreis zu zirkulieren, wodurch Wärme von erwärmtem Kühlmittel aus dem Kühlmittelkanal über den Wärmetauscher an Luft übertragen wird; und
ein Wärmeabfuhrsystem, welches ein Luftgebläse einschließt, das Luft durch den Wärmetauscher zu einer Entlüftung zu einer Umgebungsatmosphäre leitet.

## Revendications

1. Réacteur nucléaire à combustible fondu (1800), comprenant :
une cuve de réacteur (1804) ayant une surface intérieure et une surface extérieure ;
un composant de déplacement (1806) configuré pour déplacer le combustible nucléaire fondu à l'intérieur de la cuve de réacteur, la surface intérieure de la cuve de réacteur et le composant de déplacement définissant ensemble un cœur de réacteur (1810) qui, lorsqu'il contient un combustible nucléaire fondu, peut atteindre la criticité, un conduit ascendant central (1812), et un conduit de descente (1808) en communication fluidique avec le cœur de réacteur et le conduit ascendant central ; et
un réflecteur radial (1802) autour de la cuve de réacteur ; et
un conduit de refroidissement (1820) entre la cuve de réacteur et le réflecteur radial ;
la surface intérieure de la cuve de réacteur étant en communication thermique avec le conduit de descente et la surface extérieure de la cuve de réacteur étant en communication thermique avec le conduit de refroidissement, la chaleur provenant du combustible nucléaire fondu dans le conduit de descente étant transférée à travers la cuve de réacteur de la surface intérieure de la cuve de réacteur à la surface extérieure et ainsi à un réfrigérant dans le conduit de refroidissement.

2. Réacteur nucléaire selon la revendication 1, comprenant en outre :
un réflecteur axial inférieur sous la cuve de réacteur.

3. Réacteur nucléaire selon la revendication 1, le composant de déplacement incorporant un matériau réfléchissant les neutrons pour réfléchir les neutrons du cœur de réacteur en retour dans le cœur de réacteur.

4. Réacteur nucléaire selon l'une quelconque des revendications 1 à 3, le conduit de descente étant relié de manière fluidique au cœur de réacteur pour recevoir du combustible fondu chauffé à partir d'un premier emplacement dans le cœur de réacteur et décharger du combustible fondu refroidi vers un second emplacement dans le cœur de réacteur différent du premier emplacement.

5. Réacteur nucléaire selon l'une quelconque des revendications 1 à 4, le composant de déplacement comprenant une pénétration centrale à travers celui-ci qui définit le conduit ascendant central et un tube d'aspiration.

6. Réacteur nucléaire selon l'une quelconque des revendications 1 à 5, comprenant en outre :
au moins une aube fixée au composant de déplacement qui dirige le combustible nucléaire fondu en diagonale le long de la surface intérieure de la cuve de réacteur.

7. Réacteur nucléaire selon l'une quelconque des revendications 1 à 6, comprenant en outre :
un ensemble tête de cuve assurant l'étanchéité d'une partie supérieure de la cuve de réacteur.

8. Réacteur nucléaire selon l'une quelconque des revendications 1 à 7, le réflecteur radial comprenant en outre :
un puits de tambour destiné à recevoir un tambour de commande ; et
un tambour de commande comprenant un corps de matériau réfléchissant les neutrons au moins partiellement recouvert d'un matériau absorbant les neutrons, le tambour de commande étant monté rotatif à l'intérieur du tambour, la rotation du tambour de commande à l'intérieur du puits du tambour modifiant la réactivité du réacteur nucléaire.

9. Réacteur nucléaire selon la revendication 7, comprenant en outre :
un orifice d'accès dans l'ensemble tête de cuve en communication fluidique avec le cœur de réacteur.

10. Réacteur nucléaire selon l'une quelconque des revendications 1 à 9, le réflecteur radial étant mobile par rapport à la cuve de réacteur, la réactivité du réacteur nucléaire pouvant être modifiée en déplaçant le réflecteur radial.

11. Réacteur nucléaire selon la revendication 10, le réflecteur radial étant une pluralité d'éléments réflecteurs et le déplacement du réflecteur radial comprenant le déplacement d'un premier élément de la pluralité d'éléments réflecteurs.

12. Réacteur nucléaire selon l'une quelconque des revendications 1 à 11, comprenant en outre :
une turbine qui aspire le combustible nucléaire fondu dans la turbine à partir du cœur de réacteur et entraîne le combustible nucléaire fondu dans le conduit de descente.

13. Réacteur nucléaire selon l'une quelconque des revendications 1 à 12, le conduit de descente étant relié de manière fluidique au cœur de réacteur pour recevoir du combustible fondu chauffé à partir d'un premier emplacement dans le conduit ascendant central et décharger du combustible fondu refroidi vers un second emplacement dans le cœur de réacteur.

14. Réacteur nucléaire selon l'une quelconque des revendications 1 à 13, comprenant en outre :
un élément de commande dans le conduit de refroidissement pouvant être déplacé pour commander la réactivité du réacteur nucléaire.

15. Réacteur nucléaire selon l'une quelconque des revendications 1 à 14, le système de refroidissement comprenant en outre :
un circuit de refroidissement primaire comprenant le conduit de refroidissement, un échangeur de chaleur et une soufflante de refroidissement, la soufflante de refroidissement étant configurée pour faire circuler le réfrigérant à travers le circuit de refroidissement primaire, la chaleur provenant du réfrigérant chauffé provenant du conduit de refroidissement étant transférée à l'air par l'intermédiaire de l'échangeur de chaleur ; et
un système de rejet de chaleur comprenant une soufflante d'air qui dirige l'air à travers l'échangeur de chaleur vers un évent vers une atmosphère ambiante.
